# EUROPEAN PATENT SPECIFICATION

(11) **EP 4 765 794 B1**
(45) Date of publication and mention of the grant of the patent: **02.12.2026**
(21) Application number: 25220007.6
(22) Date of filing: 02.12.2025
(51) Int. Cl.: H04N 1/00, H04N 1/387

(54) **IMAGE READING DEVICE, IMAGE FORMING APPARATUS, AND IMAGE READING METHOD**
BILDLESEVORRICHTUNG, BILDERZEUGUNGSVORRICHTUNG UND BILDLESEVERFAHREN
DISPOSITIF DE LECTURE D'IMAGE, APPAREIL DE FORMATION D'IMAGE ET PROCÉDÉ DE LECTURE D'IMAGE

(30) Priority: 18.12.2024 JP 2024221888
(43) Date of publication of application: 24.06.2026
(73) Proprietor: ETRIA Co., Ltd., Yokohama, Kanagawa 220-0011 (JP)
(72) Inventor: YOSHIDA, Atsushi, Yokohama, Kanagawa 220-0011 (JP); TONAMI, Kazunari, Yokohama, Kanagawa 220-0011 (JP)
(74) Representative: SSM Sandmair

(56) References cited:
- JP-A- 2016 025 446
- JP-B2- 5 848 085
- US-A1- 2010 271 646
- US-A1- 2015 207 941
- US-A1- 2023 208 999
- US-B2- 9 883 065

## Description

### BACKGROUND

### Technical Field

The present disclosure relates to an image reading device, an image forming apparatus, and an image reading method.

### Related Art

In the related art, an electronic skew correction technique is used. The electronic skew correction technique involves performing image processing based on a document skew (or tilting) or misregistration detected from a read image obtained by reading a document by an automatic document feeder (ADF) to correct the skew or misregistration caused during reading of the document.

It is also known to additionally read the peripheral portion of the document to perform electronic skew correction.

Japanese Unexamined Patent Application Publication No. 2010-141509 discloses a configuration including a reading start instruction unit that provides an instruction to start reading a document at a position a predetermined distance before the leading edge of the document detected by a paper detection sensor passes through an image reading position, and a reading termination instruction unit that provides an instruction to terminate reading the document after the document has been additionally read by a predetermined distance since the trailing edge of the document detected by the paper detection sensor passed through the image reading position.

However, the technique of the related art does not take into consideration a case where multiple documents having different widths are placed in a mixed manner, and thus has a problem in that if a document is skewed at a large angle, a read image may include a missing part of the document.

### SUMMARY

The present disclosure provides a technique for reading an image such that a read image does not include a missing part of an object being conveyed such as a document.

The present disclosure described herein provides an image reading device including a target detection unit, a maximum size setting unit, a reading area setting unit, and an image reading unit. The target detection unit detects a leading edge of an object of multiple objects conveyed in a conveyance direction. The maximum size setting unit sets a maximum size of the multiple objects including a maximum width and a maximum length. The reading area setting unit determines and sets an entire reading length of a reading area in the object in the conveyance direction in accordance with the maximum size; and determines and sets an extended reading length of an extended portion of the object in the conveyance direction, the extended portion being disposed downstream of the leading edge of the object, detected by the target detection unit, in the conveyance direction. The image reading unit starts reading, an image on the extended portion in the object, at an extended position downstream of the leading edge by the extended reading length in the conveyance direction; and terminates reading the image on the object when a reading length that has been read reaches the entire reading length of the reading area.

The present disclosure described herein provides an image forming apparatus including the above-described image reading device and an image former. The image former forms an image on a medium, based on an image read by the image reading device.

The present disclosure described herein provides an image reading method executed by an image reading device. The image reading method includes setting a maximum size of multiple objects including a maximum width and a maximum length; determining and setting an entire reading length of a reading area in an object of the multiple objects in a conveyance direction in accordance with the maximum size, the object conveyed in the conveyance direction; determining and setting an extended reading length of an extended portion of the object in the conveyance direction, the extended portion disposed downstream of a leading edge of the object, in the conveyance direction; detecting the leading edge of the object conveyed in the conveyance direction; starting reading, an image on the extended portion in the object, at an extended position downstream of the leading edge by the extended reading length in the conveyance direction; and terminating reading the image on the object when a reading length that has been read reaches the entire reading length of the reading area.

According to one aspect of the present disclosure, it is possible to read an image such that a read image does not include a missing part of an object being conveyed such as a document.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic cross-sectional view of an image forming apparatus according to a first embodiment of the present disclosure;
FIG. 2 is a schematic cross-sectional view of a scanner of the image forming apparatus illustrated in FIG. 1;
FIG. 3 is a schematic cross-sectional view of an automatic document feeder (ADF) of the image forming apparatus illustrated in FIG. 1;
FIG. 4 is a diagram schematically illustrating an example configuration of the ADF near a document reading position;
FIG. 5 is a diagram illustrating an example schematic configuration of a main-scanning sensor and a sub-scanning sensor as viewed from directly above;
FIG. 6 is a block diagram illustrating an example hardware configuration of the image forming apparatus;
FIGs. 7A and 7B are diagrams illustrating examples of multiple documents placed on a document tray;
FIGs. 8A and 8B are diagrams illustrating examples of a document being conveyed and a reading area;
FIG. 9 is a block diagram illustrating functions of an image processing unit according to the first embodiment of the present disclosure;
FIGs. 10A, 10B, and 10C are diagrams illustrating examples of a maximum size set by a maximum size setting unit;
FIG. 11 is a diagram illustrating an example of the relationship between a document being conveyed and a reading area;
FIGs. 12A, 12B, and 12C are diagrams illustrating examples of information corresponding to document sizes of standard size documents;
FIG. 13 is a diagram illustrating an example of a length to be read downstream of the leading edge of a document;
FIG. 14 is a flowchart illustrating an example of a procedure of a reading process according to the first embodiment of the present disclosure;
FIG. 15 is a block diagram illustrating functions of an image processing unit according to a second embodiment of the present disclosure;
FIG. 16 is a diagram illustrating an example of the relationship between a document being conveyed and a reading area set in a second mode;
FIG. 17 is a flowchart illustrating an example of a procedure of a reading process according to the second embodiment of the present disclosure;
FIG. 18 is a block diagram illustrating functions of an image processing unit according to a third embodiment of the present disclosure;
FIGs. 19A and 19B are diagrams illustrating examples of a read image and a read document;
FIGs. 20A, 20B, and 20C are diagrams illustrating examples of a read image and a corrected image;
FIGs. 21A and 21B are diagrams illustrating examples of a document size detected by a size detection unit;
FIGs. 22A, 22B, 22C, and 22D are diagrams illustrating examples of a corrected image and an output image; and
FIG. 23 is a flowchart illustrating an example of a procedure of an output image generation process according to the third embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

**In** describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An image reading device, an image forming apparatus, and an image reading method according to embodiments of the present disclosure will be described in detail hereinafter with reference to the accompanying drawings.

### First Embodiment

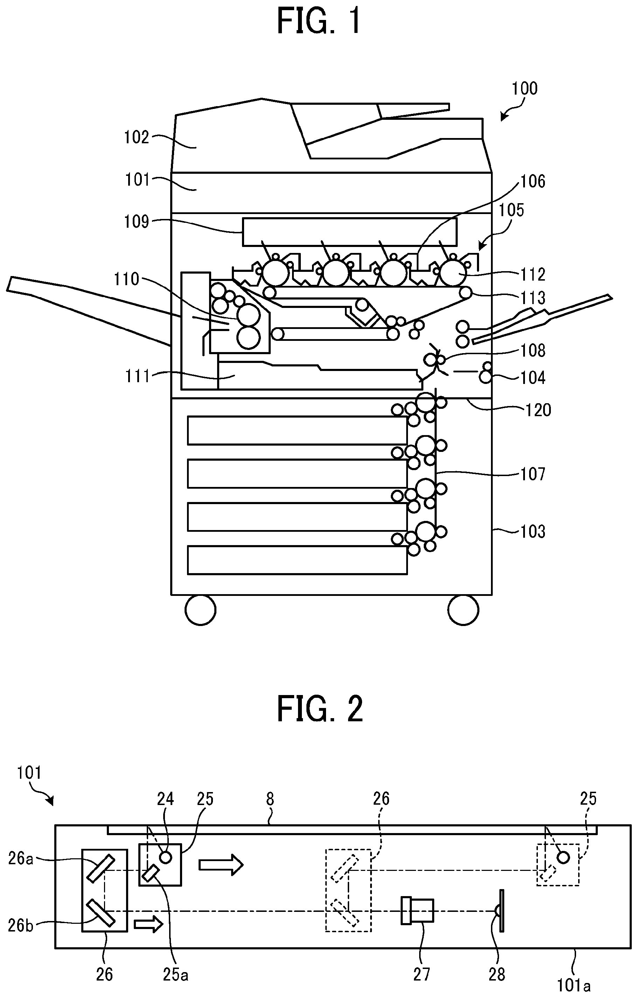

FIG. 1 is a schematic cross-sectional view of an image forming apparatus 100 according to a first embodiment of the present disclosure. The image forming apparatus 100 is, for example, a multifunction peripheral having at least two of the following functions: copying, printing, scanning, and facsimile transmission.

As illustrated in FIG. 1, the image forming apparatus 100 includes a paper feeder 103, an apparatus body 104, a scanner 101, and an automatic document feeder (ADF) 102.

The image forming apparatus 100 includes a plotter 120 inside the apparatus body 104. The plotter 120 serves as an image former. The plotter 120 includes a tandem image forming unit 105, a registration roller pair 108 that supplies the image forming unit 105 with recording paper fed by the paper feeder 103 through a conveyance path 107, an optical writing device 109, a fixing unit 110, and a duplex tray 111.

An image forming apparatus includes the image reading device (101, 102, 200) and an image former (120) to form an image on a medium, based on the read image read by the image reading device (101, 102, 200).

The image forming unit 105 includes four photoconductor drums 112 arranged side by side so as to correspond to four colors of yellow (Y), magenta (M), cyan (C), and key (or black) (K). Each of the four photoconductor drums 112 is surrounded by various pieces of image forming equipment such as a charger, a developing device 106, a transfer device, a cleaner, and a charge neutralizer.

An intermediate transfer belt 113, entrained around a drive roller and a driven roller, is disposed in between the four photoconductor drums 112 and the respective transfer devices.

In the tandem image forming apparatus 100 having the configuration described above, the optical writing device 109 performs optical writing to form latent images on the photoconductor drums 112 of the respective colors of yellow (Y), magenta (M), cyan (C), and key (or black) (K), based on a read image obtained by reading a document fed from the ADF 102 using the scanner 101. The latent images are then developed with the respective color toners by the developing devices 106 to form toner images. The toner images are primarily transferred onto the intermediate transfer belt 113 in the order of, for example, yellow (Y), magenta (M), cyan (C), and key (or black) (K). Then, in the image forming apparatus 100, the toner images of the four colors are superimposed one atop another in the primary transfer process to form a full-color toner image, and the full-color toner image is secondarily transferred onto recording paper supplied from the paper feeder 103. Thereafter, the fixing unit 110 fixes the full-color toner image onto the recording paper. Then, the recording paper bearing the fixed toner image is ejected. As a result, the image forming apparatus 100 forms a full-color image on the recording paper.

Next, the scanner 101 will be described.

FIG. 2 is a schematic cross-sectional view of the scanner 101. As illustrated in FIG. 2, the scanner 101 includes a first carriage 25, a second carriage 26, an imaging lens 27, and an image capturing unit 28, and these components are disposed in a body frame 101a of the scanner 101.

In the body frame 101a of the scanner 101, a first rail and a second rail are provided so as to extend in a sub-scanning direction (left-right direction in FIG. 2). The first rail includes two rails spaced apart from each other with a predetermined interval in a main-scanning direction orthogonal to the sub-scanning direction. The second rail has a configuration similar to that of the first rail.

The first carriage 25 is slidably attached to the first rail and is configured to be reciprocally movable along the sub-scanning direction between a position indicated by a solid line and a position indicated by a dashed line in FIG. 2 by a drive motor via a first carriage drive wire. The first carriage 25 includes a light source 24 and a first mirror member 25a.

The second carriage 26 is slidably attached to the second rail and is configured to be reciprocally movable along the sub-scanning direction between a position indicated by a solid line and a position indicated by a dashed line in FIG. 2 by a drive motor via a second carriage drive wire. The second carriage 26 includes a second mirror member 26a and a third mirror member 26b.

The first carriage 25 and the second carriage 26 move along the sub-scanning direction at a speed ratio of 2:1. With this relationship between the moving speeds of the first carriage 25 and the second carriage 26, the optical path length of light from the document surface to the imaging lens 27 does not change even when the first carriage 25 and the second carriage 26 move.

The imaging lens 27 collects light incident on and reflected from the document via the first mirror member 25a, the second mirror member 26a, and the third mirror member 26b and forms an image of the reflected light on the image capturing unit 28. The image capturing unit 28 includes an imaging element such as a charge coupled device (CCD) imaging element. The image capturing unit 28 photoelectrically converts a reflected light image of the document formed via the imaging lens 27, and outputs an analog image signal, which is a read image.

Next, the ADF 102 mounted on the scanner 101 will be described.

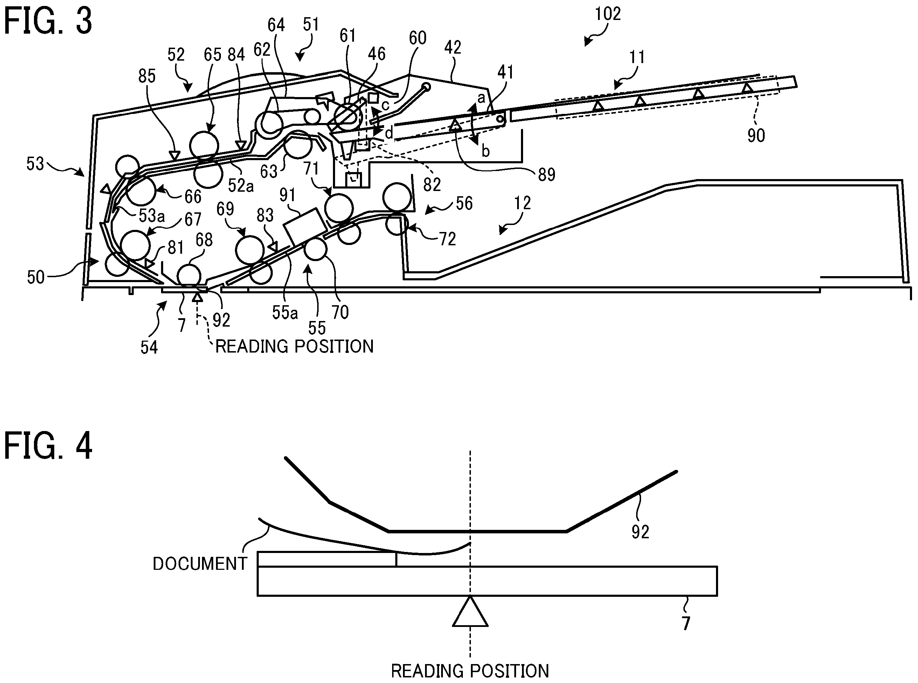

FIG. 3 is a schematic cross-sectional view of the ADF 102. As illustrated in FIG. 3, the ADF 102 includes a document tray 11 on which a document is placed. The document tray 11 includes a movable document table 41 that pivots about a proximal end thereof in directions indicated by arrows a and b in FIG. 3. The document tray 11 further includes a pair of side guide plates 42 that align the document laterally with respect to the direction in which the document is fed (i.e., the conveyance direction). The movable document table 41 is rotated to adjust the leading edge of the document in the feeding direction to an appropriate height. The document is an example of a conveyance target object.

The document tray 11 further includes a main-scanning sensor 89 and a sub-scanning sensor 90. As described below, the main-scanning sensor 89 detects a document width, which is a dimension of the document in a direction (i.e., the main-scanning direction) perpendicular to the conveyance direction, and the sub-scanning sensor 90 detects a document length, which is a dimension of the document in the conveyance direction (i.e., the sub-scanning direction).

The main-scanning sensor 89 is a sensor array including multiple sensors spaced apart from each other in the main-scanning direction, and the sub-scanning sensor 90 is a sensor array including multiple sensors spaced apart from each other in the sub-scanning direction. Non-limiting examples of the main-scanning sensor 89 and the sub-scanning sensor 90 include reflective sensors that perform detection in a non-contact manner by an optical device, and contact actuator-type sensors. The main-scanning sensor 89 is an example of a first sensor, and the sub-scanning sensor 90 is an example of a second sensor.

The sensor (i.e., another sensor in the claims) includes a first sensor (e.g., the main-scanning sensor 89) and a second sensor (e.g., the sub-scanning sensor 90). The first sensor (89) detects widths of the multiple objects; and outputs the widths of the multiple objects detected. The second sensor (90) detects lengths of the multiple objects; and outputs the lengths of the multiple objects detected. The maximum size setting unit (301) is configured to set the maximum width and the maximum length, based on the widths of the multiple objects output from the first sensor (89) and the lengths of the multiple objects output from the second sensor (90).

The pair of side guide plates 42 is slidable in the main-scanning direction and is configured to support documents of different sizes.

A set feeler 46 is provided on the fixed side of the pair of side guide plates 42. The set feeler 46 rotates in response to being contacted by a document that has been placed. A document set sensor 82 is provided in a lowermost portion on the movement path of the tip of the set feeler 46 to detect a placement of a document on the document tray 11. That is, the document set sensor 82 detects the presence or absence of a document that has been set in the ADF 102, based on whether the set feeler 46 has rotated and moved away from the document set sensor 82.

The ADF 102 includes a conveyance device 50. The conveyance device 50 includes a separating and feeding unit 51, a pullout unit 52, a turn unit 53, a first reading and conveying unit 54, a second reading and conveying unit 55, and a paper ejection unit 56. In the conveyance device 50, conveyance rollers are driven to rotate by one or more conveyance motors.

The separating and feeding unit 51 includes a pickup roller 61, a paper feed belt 62, and a reverse roller 63. The pickup roller 61 is disposed near a paper feed port 60 through which a document is fed. The paper feed belt 62 and the reverse roller 63 are disposed so as to face each other with a conveyance path interposed therebetween.

The pickup roller 61 is supported by a support arm member 64 attached to the paper feed belt 62, and moves up and down in directions indicated by arrows c and d in FIG. 3 via a cam mechanism between a contact position at which the pickup roller 61 comes into contact with the document and a separation position at which the pickup roller 61 is separated from the document. The pickup roller 61 picks up several documents (ideally, one document) from a stack of documents placed on the document tray 11 at the contact position.

The paper feed belt 62 rotates in the feeding direction, and the reverse roller 63 rotates in a direction opposite to the feeding direction. When multiple documents are fed at a time (i.e., multi-feed of documents), the reverse roller 63 rotates in the direction opposite to the rotation direction of the paper feed belt 62. However, when the reverse roller 63 is in contact with the paper feed belt 62 or when a single document is being conveyed, the reverse roller 63 rotates together with the paper feed belt 62 by the action of a torque limiter. As a result, multi-feed of documents is prevented.

The pullout unit 52 includes a pullout roller pair 65 that is a pair of rollers disposed with a conveyance path 52a interposed therebetween. The pullout unit 52 performs primary edge registration (so-called skew correction) of the fed document in accordance with the driving timings of the pullout roller pair 65 and the pickup roller 61, and pulls out and conveys the edge-aligned document.

The turn unit 53 includes an intermediate roller pair 66 and a reading entrance roller pair 67, each of which is a pair of rollers disposed with a conveyance path 53a interposed therebetween. The conveyance path 53a is curved from top to bottom. The turn unit 53 turns the document pulled out and conveyed by the intermediate roller pair 66 by conveying the document along a curved conveyance path, and conveys, using the reading entrance roller pair 67, the document to the vicinity of a slit glass 7 at a document reading position (image capturing position) with the front side of the document facing downward.

The conveyance speed of the document from the pullout unit 52 to the turn unit 53 is set to be higher than the conveyance speed of the document in the first reading and conveying unit 54. This configuration reduces the time taken for the document to be conveyed to the first reading and conveying unit 54.

The first reading and conveying unit 54 includes a first reading roller 68 disposed so as to face the slit glass 7, and a first reading exit roller pair 69 disposed on a conveyance path 55a after the end of reading. The first reading and conveying unit 54 conveys the document, which is conveyed to the vicinity of the slit glass 7, while bringing the front side of the document into contact with the slit glass 7 using the first reading roller 68. The document is read by the scanner 101 at the reading position through the slit glass 7. At this time, the first carriage 25 and the second carriage 26 of the scanner 101 are in a stopped state at a home position. The first reading and conveying unit 54 further conveys the read document using the first reading exit roller pair 69.

FIG. 4 is a diagram schematically illustrating an example configuration of the ADF 102 near the document reading position. In FIG. 4, the document is conveyed from left to right.

As illustrated in FIG. 4, the ADF 102 includes a background member 92 serving as an image capturing background at a position facing the slit glass 7. The background member 92 is, for example, white and is used for shading correction. The document is conveyed between the slit glass 7 and the background member 92. The scanner 101 reads an image at the reading position illustrated in FIG. 4.

The second reading and conveying unit 55 illustrated in FIG. 3 includes a second reading unit 91 that reads the back side of the document, a second reading roller 70, and a second reading exit roller pair 71. The second reading roller 70 is disposed so as to face the second reading unit 91 with the conveyance path 55a interposed therebetween. The second reading exit roller pair 71 is disposed downstream of the second reading unit 91 in the conveyance direction.

In the second reading and conveying unit 55, the second reading unit 91 reads the back side of the document after the front side of the document has been read. The document whose back side has been read is conveyed toward a paper ejection port by the second reading exit roller pair 71. The second reading roller 70 serves to prevent or reduce floating of the document at the second reading unit 91 and also serves as a reference white portion for acquiring shading data at the second reading unit 91. The document that is not to be subjected to duplex reading passes through the second reading unit 91.

The paper ejection unit 56 includes a paper ejection roller pair 72 near the paper ejection port to eject the document conveyed by the second reading exit roller pair 71 to a paper ejection tray 12.

The ADF 102 further includes various sensors, such as a contact sensor 84, a registration sensor 81, and a paper ejection sensor 83, along the conveyance path, and such sensors are used for conveyance control such as document conveyance distance and conveyance speed control.

A document width sensor 85 is provided between the pullout roller pair 65 and the intermediate roller pair 66. The length of the document in the conveyance direction is detected from a motor pulse in response to the contact sensor 84 or the registration sensor 81 reading the leading edge and the trailing edge of the document. The registration sensor 81 is an example of a target detection unit that detects a document being conveyed (a conveyance target object). The leading edge of the document is the downstream edge of the document in the conveyance direction, and the trailing edge of the document is the upstream edge of the document in the conveyance direction.

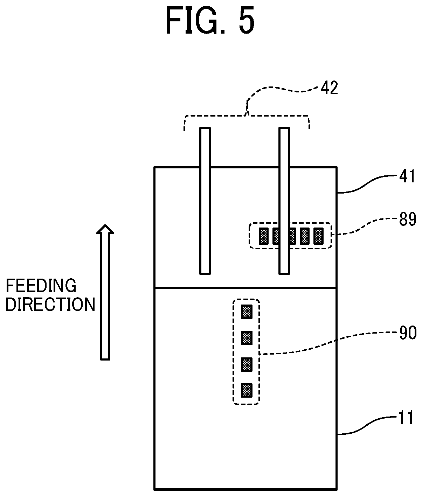

FIG. 5 is a diagram illustrating an example schematic configuration of the main-scanning sensor 89 and the sub-scanning sensor 90 as viewed from directly above.

As illustrated in FIG. 5, the main-scanning sensor 89 includes a sensor array on the movable document table 41, and the sub-scanning sensor 90 includes a sensor array on the document tray 11. The main-scanning sensor 89 and the sub-scanning sensor 90 are collectedly referred to as another sensor in the claims.

When a document is placed on the document tray 11, a portion of the sub-scanning sensor 90 arranged in the sub-scanning direction is covered by the document, and the document length can be detected in accordance with the position of the sensor that reacts the farthest.

Similarly, when the side guide plates 42 close in accordance with the document that has been placed, one of the side guide plates 42 blocks a portion of the main-scanning sensor 89 arranged in the main-scanning direction, and the document width can be detected in accordance with the position of the sensor that reacts the farthest.

In the following, the main-scanning sensor 89 and the sub-scanning sensor 90 may be collectively referred to as a document size detection sensor. Each of the sensors of the document size detection sensor is installed, for example, near an intermediate position between two adjacent sizes to allow a distinction among multiple documents of standard sizes.

In a case where the document width is detected with reference to the center position in the main-scanning direction, the right edge of the document (i.e., the right boundary in the main-scanning direction) is located at a position a distance of 105 mm from the center position when the document is an A4 portrait-oriented document (210 mm wide).

The orientation of the document (whether the document is placed in the portrait or landscape orientation) is determined such that the document is in the portrait orientation when the long sides of the document are parallel to the sub-scanning direction and is in the landscape orientation when the short sides of the document are parallel to the sub-scanning direction.

Similarly, the right edge of the document is located at a position a distance of 91 mm from the center position when the document is a B5 portrait-oriented document (182 mm wide), and is located at a position a distance of 74 mm from the center position when the document is an A5 portrait-oriented document (148 mm wide). In this case, the sensors are arranged near positions (distances of 96 mm and 82.5 mm from the center position) corresponding to the middle positions of the right edges of the documents of the respective sizes. The size detection in the main-scanning direction has been described, and the same applies to the size detection in the sub-scanning direction.

When the sensors are discretely installed as described above, the size of a document of an irregular size is difficult to accurately detect, but an approximate value of the size can be obtained by determining, from the response of each sensor, whether one of the side guide plates 42 is inside the sensor position. For example, the sensors of the main-scanning sensor 89 described above can be used to detect document widths of irregular sizes such as "165 mm (82.5 × 2) or less", "greater than 165 mm to 196 mm (98 × 2) or less", and "greater than 196 mm". The number of sensors may be increased to increase the resolution of a detectable size and perform accurate size detection. The number of sensors may be increased to increase the resolution of a size that can be detected and perform accurate size detection.

Next, the hardware configuration of the image forming apparatus 100 will be described.

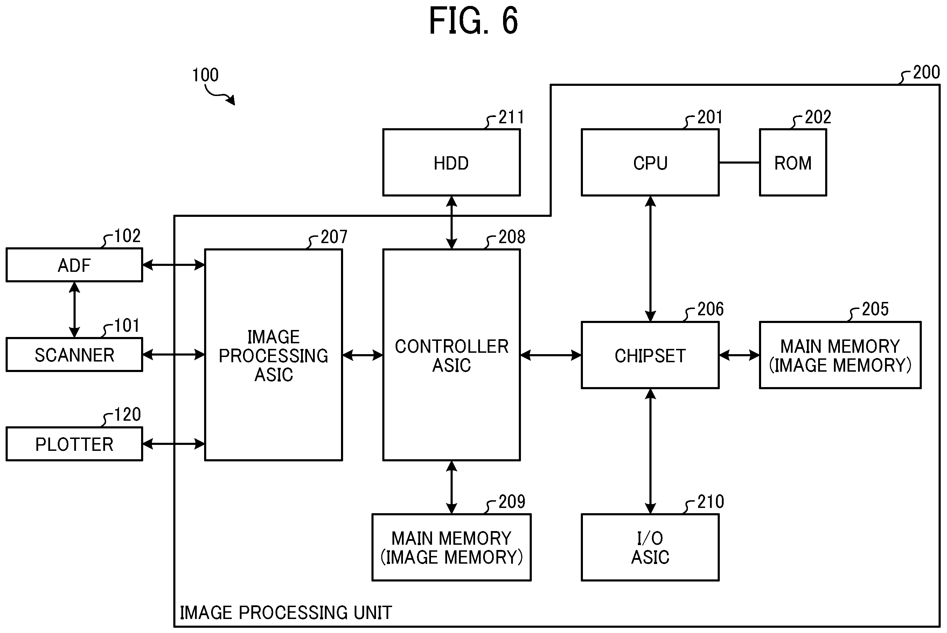

FIG. 6 is a block diagram illustrating an example hardware configuration of the image forming apparatus 100. As illustrated in FIG. 6, the image forming apparatus 100 includes an image processing unit 200 that performs predetermined processing on an image read by the scanner 101 from a document conveyed by the ADF 102 and outputs image data to the plotter 120. The scanner 101, the ADF 102, and the image processing unit 200 are included in an image reading device.

The image processing unit 200 includes a central processing unit (CPU) 201, a read only memory (ROM) 202, a main memory 205, a chipset 206, an image processing application-specific integrated circuit (ASIC) 207, a controller ASIC 208, a main memory 209, and an input/output (I/O) ASIC 210.

The CPU 201 controls the image forming apparatus 100. The main memory 205 is an image memory used as a work area into which a program for the CPU 201 to control the image forming apparatus 100 is loaded or used to temporarily store image data to be handled by the CPU 201. The chipset 206 is used together with the CPU 201 to control an access from the controller ASIC 208 and the I/O ASIC 210 to the main memory 205.

The program to be executed by the image forming apparatus 100 according to the present embodiment may be recorded on and provided through a computer-readable recording medium, such as a compact disc read only memory (CD-ROM), a flexible disk (FD), a compact disc recordable (CD-R), or a digital versatile disk (DVD), in an installable or executable file format.

The program to be executed by the image forming apparatus 100 according to the present embodiment may be configured to be stored in a computer connected to a network such as the Internet and provided by being downloaded via the network. The program to be executed by the image forming apparatus 100 according to the present embodiment may be configured to be provided or distributed via a network such as the Internet.

The ADF 102 has a function of conveying a document to the scanner 101. The scanner 101 has a function of reading, from the document, image data to be copied or image data to be output to an external interface. The plotter 120 has a function of printing image data subjected to image processing by the image processing ASIC 207.

The image processing ASIC 207 performs image processing on the image data read by the scanner 101 and outputs the image data to the controller ASIC 208. Further, the image processing ASIC 207 performs image processing on image data from the controller ASIC 208 to allow the plotter 120 to print the image data, and transmits the processed image data to the plotter 120 in accordance with the print timing of the plotter 120.

The controller ASIC 208 uses the main memory 205 via the chipset 206 to, for example, rotate and edit image data handled by the image forming apparatus 100. The controller ASIC 208 stores the image data in a hard disk drive (HDD) 211, and transmits and receives the image data to and from the image processing ASIC 207. The main memory 209 is used as an image memory for the controller ASIC 208 to perform image processing. The HDD 211 is used to temporarily store the image data subjected to image processing.

The I/O ASIC 210 is an external interface that assigns an additional function to the image forming apparatus 100. For example, the I/O ASIC 210 includes, for example, interfaces, such as a network interface, a universal serial bus (USB) interface, a secure digital (SD) card interface, an operation unit interface, a serial peripheral interface (SPI), an inter-integrated circuit (I2C) interface, and an interface for the document width sensor 85, a hardware accelerator for accelerating image processing, and an encryption processing circuit.

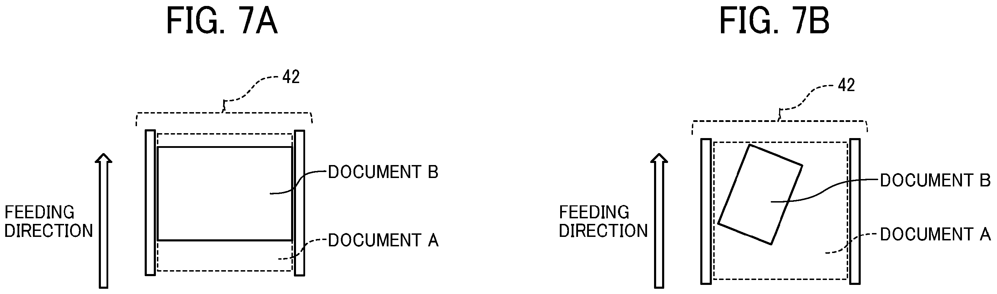

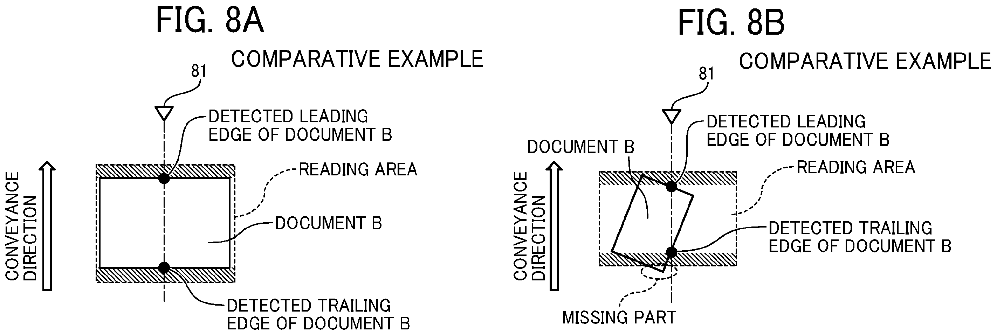

A missing part of a document in a read image in the related art will be described with reference to FIGs. 7A, 7B, 8A, and 8B.

FIGs. 7A and 7B are diagrams illustrating examples of multiple documents placed on the document tray 11. A plurality of documents (i.e., two or more images) are hereinafter referred to as "multiple documents" for convenience. FIG. 7A illustrates an example in which two documents having an equal width are placed. FIG. 7B illustrates an example in which two documents having different widths are placed. With the recent revision of the Electronic Record Retention Law in Japan and the spread of digital transformation (DX), there have been increasing opportunities to use documents of irregular sizes and feed multiple documents having different widths as illustrated in FIG. 7B.

In the example illustrated in FIG. 7A, the side guide plates 42 can be adjusted in accordance with the document width, resulting in the skew (tilt) of the documents being less likely to increase. In the example illustrated in FIG. 7B, by contrast, the side guide plates 42 are difficult to adjust in accordance with document B, possibly resulting in the skew of the document B being likely to increase.

FIGs. 8A and 8B are diagrams illustrating examples of a document being conveyed and a reading area. FIG. 8A illustrates the document B illustrated in FIG. 7A and a reading area of the document B. FIG. 8B illustrates the document B illustrated in FIG. 7B and a reading area of the document B. In FIG. 8A, the document B is not skewed, and the reading area is provided with extended areas, which are indicated by hatching, outside the leading edge and the trailing edge of the document B. As a result, a read image includes no missing part of the document B. In FIG. 8B, by contrast, the document B being conveyed is skewed greatly. Thus, even when the reading area is provided with extended areas similar to those illustrated in FIG. 8A, a read image includes a missing part of the document B.

Next, the functions of the image reading device according to the present embodiment, including the scanner 101, the ADF 102, and the image processing unit 200, will be described.

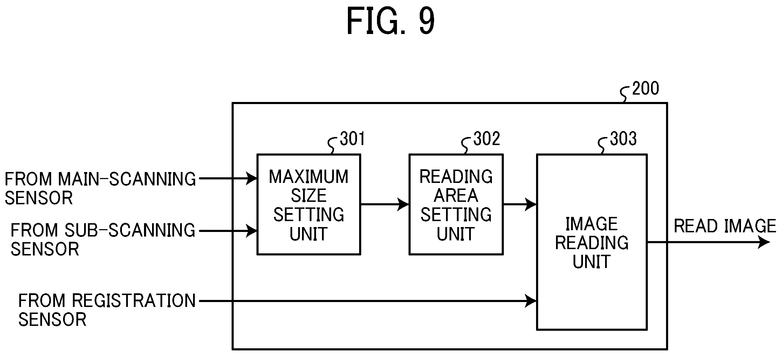

FIG. 9 is a block diagram illustrating functions of the image processing unit 200 according to the first embodiment. Among the functions implemented by the image processing unit 200, characteristic functions according to the present embodiment will be described.

As illustrated in FIG. 9, the image processing unit 200 includes functional units, namely, a maximum size setting unit 301, a reading area setting unit 302, and an image reading unit 303. The functional units described above may be implemented by the image processing ASIC 207 or the controller ASIC 208 or may be implemented by the CPU 201 executing a program.

The maximum size setting unit 301 sets a maximum size of multiple documents placed on the document tray 11, based on a detection result of the document size detection sensor. The maximum size of the multiple documents refers to the maximum width and the maximum length of the multiple documents. For example, in a case where an A4 portrait-oriented document (210 mm wide and 297 mm long) and a B5 landscape-oriented document (257 mm wide and 182 mm long) are placed in a mixed manner without tilting, the maximum width is set to 257 mm, and the maximum length is set to 297 mm.

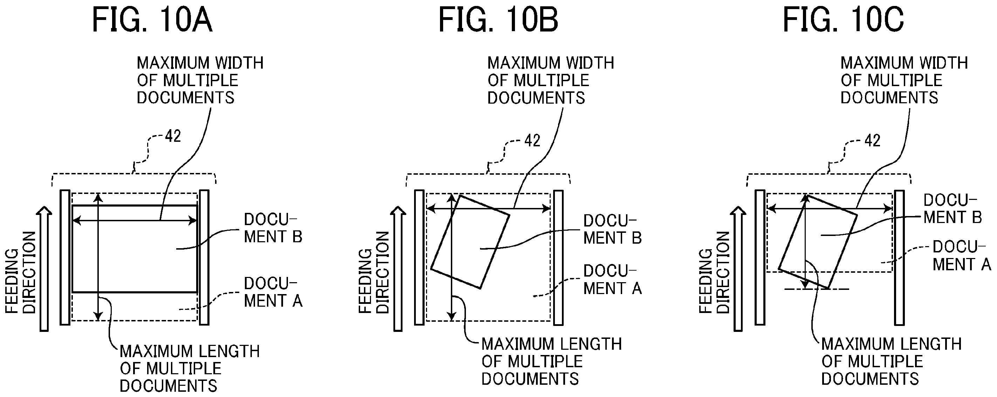

FIGs. 10A, 10B, and 10C are diagrams illustrating examples of a maximum size set by the maximum size setting unit 301. In FIG. 10A, since documents A and B have an equal width, this width is set as the maximum width. Since the document A has a longer length than the document B, the length of the document A is set as the maximum length. In FIG. 10B, the document B is placed tilted, but is placed within the range of placement of the document A. Thus, the width and the length of the document A are set as the maximum width and the maximum length, respectively. In FIG. 10C, by contrast, the document B is placed tilted such that an upstream portion of the document B in the feeding direction extends beyond the range of placement of the document A. Accordingly, as illustrated in FIG. 10C, the length of the document B in the feeding direction is set as the maximum length.

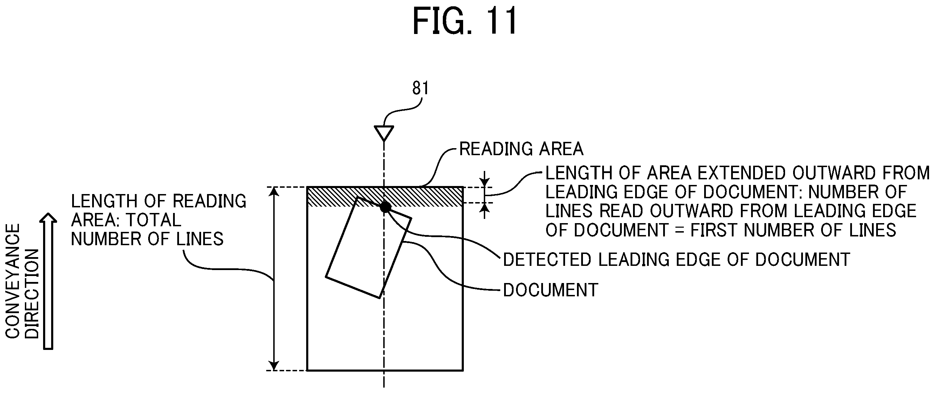

The reading area setting unit 302 sets the length of the reading area and a first length. The length of the reading area is a reading length used to read a document. The first length is a reading length corresponding to a portion to be read downstream of the leading edge of the document in the conveyance direction. The length of the reading area and the first length are determined in accordance with the set maximum size. FIG. 11 is a diagram illustrating an example of the relationship between a document being conveyed and a reading area. As illustrated in FIG. 11, the reading area includes an extended area, which is indicated by hatching, outside the leading edge of the document (downstream of the leading edge of the document in the conveyance direction). The length of the reading area is set to a reading length used for reading and determined in accordance with the maximum size. The length of the extended area included in the reading area (i.e., the first length) is set to a reading length determined in accordance with the maximum size and used to read a portion downstream of the leading edge of the document. The width of the reading area is set to, for example, a width obtained by extending the maximum width to the left and right.

In the present embodiment, the number of reading lines corresponding to the length of the reading area is referred to as the total number of lines. The term "reading line" refers to a data row read in the main-scanning direction. The term "number of reading lines" refers to the number of reading lines counted in the sub-scanning direction. The number of reading lines corresponding to the first length is referred to as a first number of lines. Accordingly, the total number of lines may be referred to as the number of reading lines used to read a document. The first number of lines may be referred to as the number of reading lines to be read downstream of the leading edge of the document in the conveyance direction.

That is, the reading area setting unit 302 sets the reading area by setting the length of the reading area and the first length or the total number of lines and the first number of lines in accordance with the maximum size. The reading area setting unit 302 may set the length of the reading area and the first length or the total number of lines and the first number of lines in accordance with the conveyance speed of the document.

The reading area setting unit (302) is configured to: set at least one of: the entire reading length of the reading area; and the extended reading length in accordance with a conveyance speed of the object being conveyed.

The image reading unit 303 reads an image in accordance with a detection result obtained by the registration sensor 81 and the set reading area. Specifically, in response to the registration sensor 81 detecting the leading edge of a document being conveyed, the image reading unit 303 starts reading the image at a position located downstream of the leading edge of the document by a distance equal to the first number of lines (or the first length) in the conveyance direction, and reads the image until the number of lines (or length) that has been read reaches the total number of lines (or the length of the reading area).

The registration sensor 81 may be disposed in contact with the reading position. This is to reduce the influence of variations in conveyance speed on the control of the time taken from the detection of the document by the registration sensor 81 to the start of reading. In the case where the registration sensor 81 is disposed in contact with the reading position, the first length is limited. Thus, the reading area setting unit 302 may set the first number of lines (or the first length) to a value (e.g., a fixed value) that is independent of the maximum size.

In other words, the reading area setting unit (302) is configured to set the extended reading length to a value that is independent of the maximum size; and set the entire reading length of the reading area to a value that depends on the maximum size.

The reading area setting unit (302) is configured to set the extended reading length to a value that depends on the maximum size; and set the entire reading length of the reading area to a value that depends on the maximum size.

In contrast, in a case where the distance between the registration sensor 81 and the reading position is sufficient, the first number of lines (or the first length) may be set in accordance with the maximum size to reduce the increase in the total number of lines (or the length of the reading area), for example, when the maximum length is small. As a result, the data size of the read image can be reduced, and the processing speed can be improved. The contact sensor 84 may be used instead of the registration sensor 81 to ensure the distance between the position at which the leading edge of the document is detected and the reading position.

In the example illustrated in FIG. 11, one registration sensor 81, which is the target detection unit, is disposed at the center in the main-scanning direction. In another example, the target detection unit may include multiple sensors arranged side by side in the main-scanning direction.

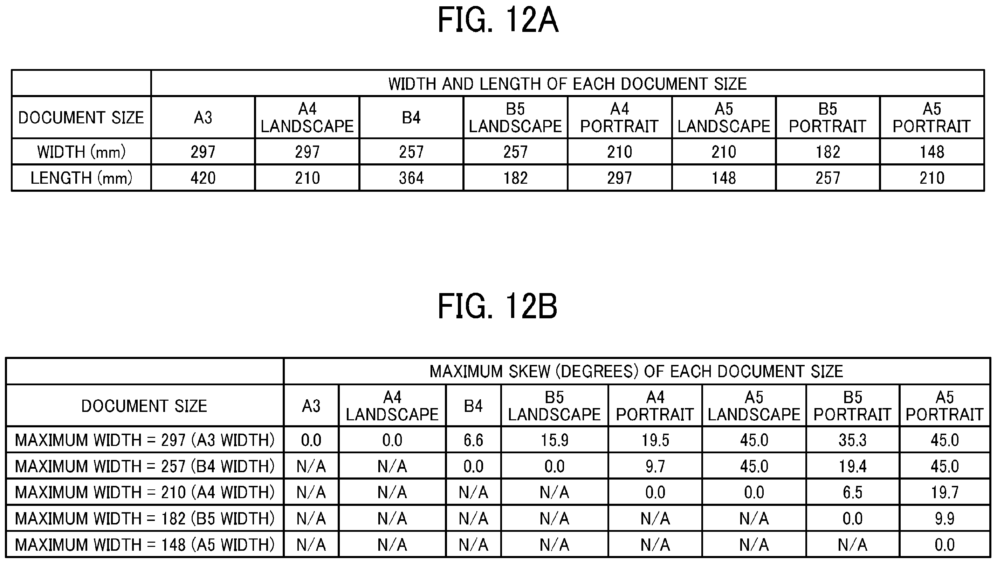

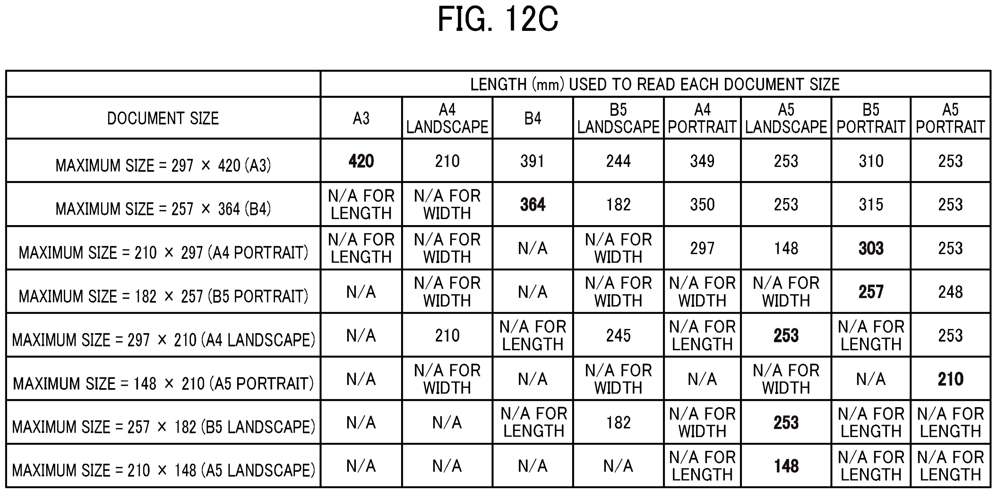

Next, the length of reading (the length of the reading area) and the number of reading lines (the total number of lines), which are used to read multiple standard size documents, will be described with reference to FIGs. 12A, 12B, and 12C. FIGs. 12A, 12B, and 12C are diagrams illustrating examples of information corresponding to document sizes of standard size documents.

FIG. 12A is a table illustrating the width and length of each document size. The illustrated example assumes that A4, B5, and A5 documents can be placed on the document tray 11 in both the portrait orientation and the landscape orientation and the document sizes of the A4, B5, and A5 documents in each of the portrait and landscape orientations are separately illustrated.

FIG. 12B is a table illustrating, for each maximum width, the maximum skew that can be caused in the document tray 11 for each document size. For example, when the maximum width of the multiple documents is equal to the width of A3 paper, an A3 document included in the multiple documents is not tilted, and thus the maximum skew is 0 degrees. However, an A5 landscape-oriented document can be tilted up to 45 degrees, and thus the maximum skew is 45 degrees. In FIG. 12B, the symbol "N/A" indicates that a document having the corresponding document size is not included in the multiple documents. For example, when the maximum width of the multiple documents is equal to the width of B4 paper, the multiple documents do not include A3 documents or A4 landscape-oriented documents.

FIG. 12C is a table illustrating, for each maximum size, the length used to read each document size. For example, when the maximum size of the multiple documents is equal to the size of A3 paper, the maximum skew of an A3 document included in the multiple documents is 0 degrees, and thus the length used for reading is equal to the length (420 mm) of A3 paper. In contrast, since the maximum skew of an A5 landscape-oriented document included in the multiple documents is 45 degrees, the length used for reading is equal to the length (253 mm) of the A5 landscape-oriented document tilted by 45 degrees in the sub-scanning direction. In FIG. 12C, "N/A", "N/A FOR WIDTH", and "N/A FOR LENGTH" indicate that documents having the corresponding document sizes, width, or length are not included in the multiple documents. For example, when the maximum size of the multiple documents is equal to the size of B4 paper, as indicated by the sign "N/A FOR LENGTH", the multiple documents do not include a document having a length equal to the length of A3 paper, and, as indicated by "N/A FOR WIDTH", the multiple documents do not include a document having a width equal to the width of A4 paper in landscape. When the maximum size of the multiple documents is equal to the size of A4 paper in portrait, as indicated by "N/A", the multiple documents do not include a B4 document.

To read multiple standard size documents, the reading area setting unit 302 sets the length of the reading area corresponding to the maximum size in accordance with the data as illustrated in FIG. 12C. In the example illustrated in FIG. 12C, the reading area setting unit 302 sets, as the length of the reading area, the maximum length (the length indicated by the bold typeface) among the lengths used to read the respective document sizes corresponding to each maximum size. The reading area setting unit 302 further sets the number of reading lines corresponding to the length of the reading area as the total number of lines.

In the example described above, multiple standard size documents are read. In general, the maximum size can be used to determine the maximum skew of a document of a certain size and to determine whether the document of the certain size can be included in multiple documents corresponding to the maximum size. Further, the size of the document and the maximum skew can be used to calculate the length of the reading area and the total number of lines. The length of the reading area and the total number of lines may be calculated each time processing is performed, or may be calculated and stored in advance such that the stored values are read and used.

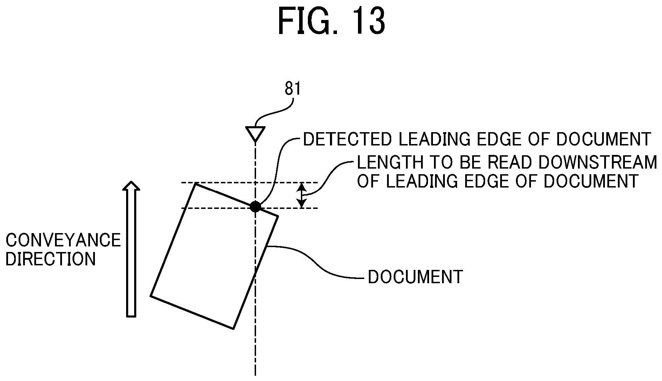

Next, the first length and the first number of lines described above will be described. FIG. 13 is a diagram illustrating an example of a length to be read downstream of the leading edge of a document. The document illustrated in FIG. 13 is assumed to be tilted at an angle of a maximum skew with respect to the maximum size. When the size, the orientation, and the maximum skew of the document are given, the "length to be read downstream of the leading edge of a document" illustrated in FIG. 13 can be calculated. Then, the length used to read the leading edge of each of the documents that can be included in the multiple documents corresponding to the maximum size is calculated, and the maximum value of the calculated lengths is calculated to determine the first length corresponding to each maximum size.

The reading area setting unit 302 sets, as the first length, the reading length determined in the way described above. The reading area setting unit 302 further sets, as the first number of lines, the number of reading lines corresponding to the first length. The first length and the first number of lines may be calculated each time processing is performed, or may be calculated and stored in advance such that the stored values are read and used.

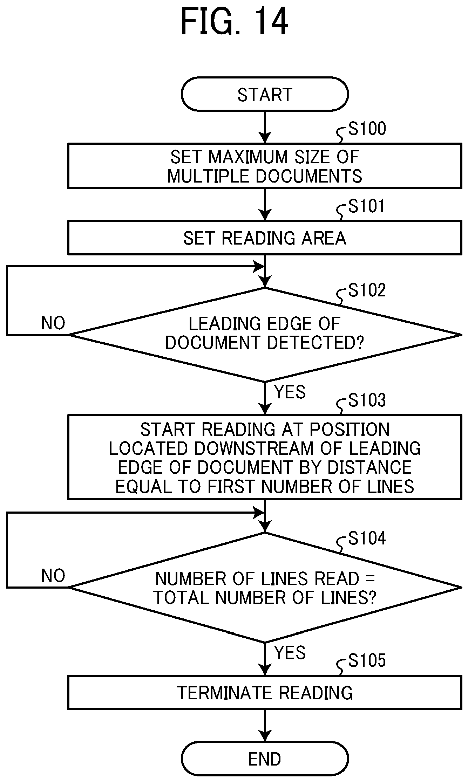

FIG. 14 is a flowchart illustrating an example of a procedure of a reading process according to the first embodiment. In the following description, the reading process is a process using the number of lines. Alternatively, the reading process may be a process using a length instead of the number of lines. First, the maximum size setting unit 301 sets a maximum size of multiple documents (step S100).

Then, the reading area setting unit 302 sets a reading area (the first number of lines and the total number of lines) in accordance with the maximum size (step S101). In response to the registration sensor 81 detecting the leading edge of a document being conveyed (step S102: Yes), the image reading unit 303 starts reading at a position located downstream of the leading edge of the document by the distance equal to the first number of lines (step S103).

On the other hand, if the registration sensor 81 does not detect the leading edge of a document being conveyed (step S102: No), the process returns to step S102, and it is repeatedly determined whether the registration sensor 81 detects the leading edge of the document.

If the number of lines read by the image reading unit 303 becomes equal to the total number of lines set by the reading area setting unit 302 (step S104: Yes), the image reading unit 303 terminates reading (step S105). On the other hand, if the number of lines read by the image reading unit 303 is smaller than the total number of lines (step S104: No), the process returns to step S104, and the number of lines read by the image reading unit 303 is repeatedly checked.

As described above, according to the present embodiment, since an image is read using a reading area set in accordance with the maximum size, it is possible to obtain a read image that does not include a missing part of a document. In addition, a read image including no missing part of a document is used to detect skew (tilt) or misregistration (position) of the document and to correct the skew or the misregistration. As a result, a high-quality image can be generated using an accurate detection result. Furthermore, a read image including no missing part of a document is used to detect the document size and to crop the document. As a result, an image having an appropriate size can be acquired using an accurate detection result.

In the foregoing description, a document is read. However, the image reading device according to the present embodiment may read an object other than a document. For example, a conveyance target object to be conveyed on a production line in a factory, such as an electronic substrate or a wafer, or a conveyance target object to be conveyed by a conveyor belt in a logistics center, such as a cardboard box or a container, may be read.

In other words, an image reading device includes a target detection unit (81), a maximum size setting unit (301), a reading area setting unit (302), and an image reading unit (303). The target detection unit (81) detects a leading edge of an object of multiple objects conveyed in a conveyance direction. The maximum size setting unit (301) is configured to set a maximum size of the multiple objects including a maximum width and a maximum length. The reading area setting unit (302) is configured to determine, in accordance with the maximum size set by determine and set an entire reading length of a reading area in the object in the conveyance direction in accordance with the maximum size; and determine and set an extended reading length of an extended portion of the object in the conveyance direction. The extended portion is disposed downstream of a leading edge of the object, detected by the target detection unit (81), in the conveyance direction. The target detection unit (81) is configured to control the sensor to detect the leading edge of the object in the conveyance direction. The image reading unit (303) is configured to start reading, an image on the extended portion in the object, at an extended position downstream of the leading edge by the extended reading length in the conveyance direction; and terminate reading the image on the object when a reading length that has been read reaches the entire reading length of the reading area.

The sensor (or said another sensor in the claims) includes a first sensor (e.g., the main-scanning sensor 89) and a second sensor (e.g., the sub-scanning sensor 90). The first sensor detects widths of the multiple objects and outputs the widths of the multiple objects detected. The second sensor (e.g., the sub-scanning sensor 90) detects lengths of the multiple objects and outputs the lengths of the multiple objects detected. The maximum size setting unit 301 is configured to set the maximum width and the maximum length, based on the widths of the multiple objects output from the first sensor (e.g., the main-scanning sensor 89) and the lengths of the multiple objects output from the second sensor (e.g., the sub-scanning sensor 90).

An image reading method executed by an image reading device, the image reading method includes setting (S100; S211) a maximum size of multiple objects including a maximum width and a maximum length; determining and setting (S100; S211) an entire reading length of a reading area in an object of the multiple objects in a conveyance direction in accordance with the maximum size, the object conveyed in the conveyance direction; determining and setting (S100; S211) an extended reading length of an extended portion of the object in the conveyance direction, the extended portion disposed downstream of a leading edge of the object, in the conveyance direction; detecting (102; S213) the leading edge of the object conveyed in the conveyance direction; starting (S103; S214; S223) reading, an image on the extended portion in the object, at an extended position downstream of the leading edge by the extended reading length in the conveyance direction; and terminating (S105; S216) reading the image on the object when a reading length that has been read reaches the entire reading length of the reading area.

### Second Embodiment

Next, a second embodiment of the present disclosure will be described.

In the second embodiment, a first mode or a second mode can be set. In the first mode, multiple documents having different widths are placed on the document tray 11. In the second mode, multiple documents having an equal width are placed on the document tray 11. In the following, portions of the second embodiment that differ from those of the first embodiment are described, while portions that are identical to those of the first embodiment are omitted.

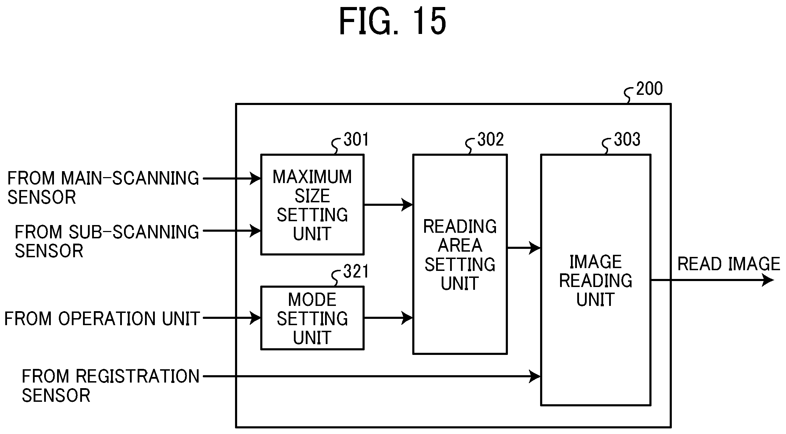

FIG. 15 is a block diagram illustrating functions of the image processing unit 200 according to the second embodiment.

The difference from FIG. 9 is that the image processing unit 200 further includes a mode setting unit 321 and the output of the mode setting unit 321 is input to the reading area setting unit 302. The functional units illustrated in FIG. 15 may be implemented by the image processing ASIC 207 or the controller ASIC 208 or may be implemented by the CPU 201 executing a program.

The mode setting unit 321 sets the first mode or the second mode in accordance with information (e.g., an instruction to set a mode) input by a user using the operation unit included in the I/O ASIC 210. The first mode is a mode set when at least one of the multiple documents placed on the document tray 11 has a different width. The second mode is a mode set when the multiple documents placed on the document tray 11 have an equal width.

In other words, the image reading device further includes: a mode setting unit (321) configured to set a mode, including: a first mode performed when at least one of the multiple objects has a different width; or a second mode performed when the multiple objects have an equal width. The reading area setting unit (302) is configured to set the entire reading length of the reading area in accordance with the first mode or the second mode previously set by the mode setting unit (321).

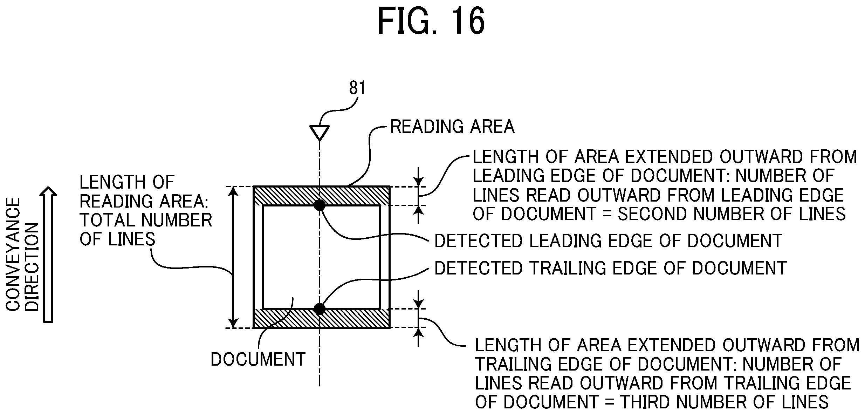

The reading area setting unit 302 sets a reading area in accordance with the mode set by the mode setting unit 321. In a case where the mode setting unit 321 sets the first mode, the reading area setting unit 302 sets the first number of lines and the total number of lines (or the first length and the length of the reading area) in a manner similar to that in the first embodiment. In a case where the mode setting unit 321 sets the second mode, the reading area setting unit 302 sets a second number of lines and a third number of lines (or a second length and a third length described below) as illustrated in FIG. 16.

FIG. 16 is a diagram illustrating an example of the relationship between a document being conveyed and a reading area set in the second mode. As illustrated in FIG. 16, the reading area includes a leading-edge extended area, which is indicated by hatching, outside the leading edge of the document (downstream of the leading edge of the document in the conveyance direction) and a trailing-edge extended area, which is indicated by hatching, outside the trailing edge of the document (upstream of the trailing edge of the document in the conveyance direction). **In** the present embodiment, the lengths of the extended areas do not depend on the maximum size. When the multiple documents placed on the document tray 11 have an equal width, the angle of skew generated is small. Thus, a relatively small value can be set as the lengths of the extended areas. The width of the reading area is set to, for example, a width obtained by extending the maximum width to the left and right.

**In** the present embodiment, the number of reading lines corresponding to the length of the leading-edge extended area (i.e., the second length) in a case where the second mode is set is referred to as a second number of lines. The number of reading lines corresponding to the length of the trailing-edge extended area (i.e., the third length) is referred to as a third number of lines. That is, the reading area setting unit 302 sets a reading area by setting the second length and the third length or the second number of lines and the third number of lines. The reading area setting unit 302 may set the second length and the third length or the second number of lines and the third number of lines in accordance with the conveyance speed of the document.

The target detection unit (81) is configured to further detect a trailing edge of the object. The reading area setting unit (302) is configured to set, when the first mode is set by the mode setting unit (321), the extended reading length as a first reading length and the entire reading length of the reading area. The image reading unit (303) is configured to: start reading the image on the object at the extended position as a first position downstream of the leading edge by the first reading length in the conveyance direction; and terminate reading the image on the object when a reading length that has been read reaches the entire reading length of the reading area. The reading area setting unit (302) is configured to set, when the second mode is set by the mode setting unit (321), a second reading length of the entire reading length in the conveyance direction and a third reading length of the reading area in the conveyance direction. The second reading length corresponds to a second portion to be read downstream of the leading edge of the object in the conveyance direction. The third reading length corresponds to a third portion to be read upstream of the trailing edge of the object in the conveyance direction. The image reading unit (303) is configured to: start reading the image on the object at a second position downstream of the leading edge of the object by the second reading length in the conveyance direction; and terminate reading the image on the object at a third position upstream of the trailing edge of the object by the third reading length in the conveyance direction.

The reading area setting unit (302) is configured to: set at least one of: the entire reading length of the reading area; the first reading length, the second reading length, and the third reading length in accordance with a conveyance speed of the object being conveyed.

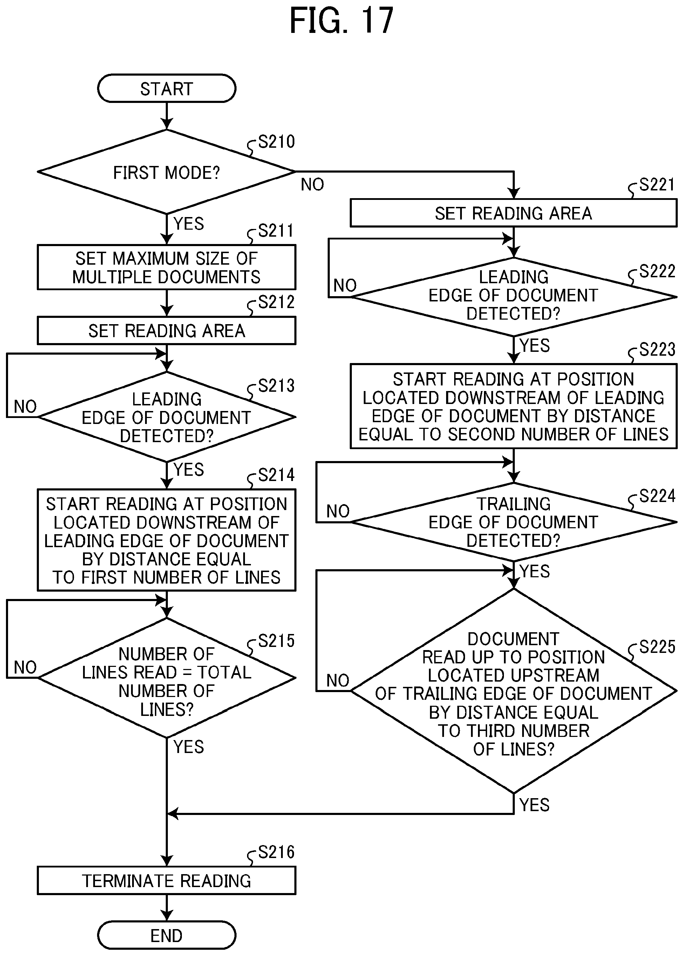

FIG. 17 is a flowchart illustrating an example of a procedure of a reading process according to the second embodiment. The difference from FIG. 14 is that step S210 of determining whether the set mode is the first mode is additionally included and steps S221 to S225 are additionally included as a procedure performed when the set mode is the second mode. Since the operations of steps S211 to S216 are similar to the operations of steps S100 to S105 illustrated in FIG. 14, respectively, descriptions thereof will be omitted. In the following description, the reading process is a process using the number of lines. Alternatively, the reading process may be a process using a length instead of the number of lines.

If the mode setting unit 321 sets the first mode (step S210: Yes), the process proceeds to step S211.

On the other hand, if the mode setting unit 321 sets the second mode (step S210: No), the process proceeds to step S221. Then, the reading area setting unit 302 sets a reading area by setting the second number of lines and the third number of lines (step S221). In response to the registration sensor 81 detecting the leading edge of a document being conveyed (step S222: Yes), the image reading unit 303 starts reading at a position located downstream of the leading edge of the document by the distance equal to the second number of lines (step S223).

On the other hand, if the registration sensor 81 does not detect the leading edge of a document being conveyed (step S222: No), the process returns to step S222, and it is repeatedly determined whether the registration sensor 81 detects the leading edge of the document.

If the registration sensor 81 detects the trailing edge of the document being conveyed (step S224: Yes), the process proceeds to step S225. On the other hand, if the registration sensor 81 does not detect the trailing edge of the document (step S224: No), the process returns to step S224, and it is repeatedly determined whether the registration sensor 81 detects the trailing edge of the document.

If the image reading unit 303 reads the document up to a position located upstream of the trailing edge of the document by the distance equal to the third number of lines (step S225: Yes), the image reading unit 303 terminates reading (step S216). On the other hand, if the number of lines read by the image reading unit 303 at a position located upstream of the trailing edge of the document is smaller than the third number of lines (step S225: No), the process returns to step S225, and the number of lines read is repeatedly checked.

As described above, according to the present embodiment, the reading area can be set in accordance with whether the set mode is the first mode in which the multiple documents have different widths or the second mode in which the multiple documents have an equal width. In the first mode, a read image including no missing part of each of the documents having different widths can be obtained. In the second mode, an image is read with a reading area whose range is reduced, resulting in a reduction in memory size and improvement in productivity.

### Third Embodiment

Next, a third embodiment of the present disclosure will be described.

In the third embodiment, skew or misregistration of a document is detected from a read image to correct the skew or misregistration, and the document is cropped from the read image. In the following, portions of the third embodiment that differ from those of the second embodiment are described, while portions that are identical to those of the second embodiment are omitted.

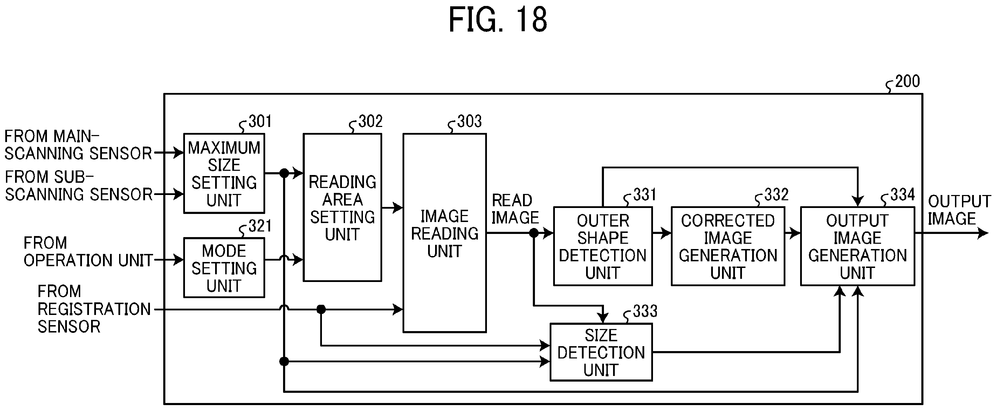

FIG. 18 is a block diagram illustrating functions of the image processing unit 200 according to the third embodiment.

The difference from FIG. 15 is that the image processing unit 200 further includes an outer shape detection unit 331, a corrected image generation unit 332, a size detection unit 333, and an output image generation unit 334. The functional units illustrated in FIG. 18 may be implemented by the image processing ASIC 207 or the controller ASIC 208 or may be implemented by the CPU 201 executing a program.

The outer shape detection unit 331 detects the outer shape of a document and outputs an outcome signal indicating whether the detection of the outer shape is successful and an outer shape signal indicating the outer shape. The detection of the outer shape of the document includes the detection of skew or misregistration of the document. The outer shape detection unit 331 uses a difference in density or color between the background member 92 and the document included in the read image to detect the boundary, and calculates the outer shape of the document.

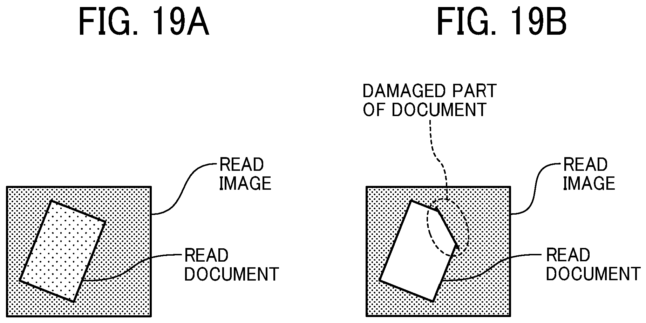

FIGs. 19A and 19B are diagrams illustrating examples of a read image and a read document. FIG. 19A illustrates an example in which the background member 92 and the read document have similar densities or colors. FIG. 19B illustrates an example in which part of the read document is damaged. **In** the read image as illustrated in FIG. 19A, the boundary between the background member 92 and the document is difficult to detect, and the detection of the outer shape may be unsuccessful (or may fail). **In** the read image as illustrated in FIG. 19B, it is difficult to determine which of the boundaries of the background member 92 and the document is used to calculate skewness, and the detection of the outer shape may fail.

The corrected image generation unit 332 generates a corrected image based on the outcome signal and the outer shape signal output from the outer shape detection unit 331 and the read image, which has been read by the image reading unit 303.

The image reading device further includes: an outer shape detection unit (331), a corrected image generation unit (332), a size detection unit (333), and an output image generation unit (334). The outer shape detection unit (331) is configured to detect an outer shape of the object; and output an outcome signal indicating whether a detection of the outer shape is successful; and an outer shape signal indicating the outer shape. The corrected image generation unit (332) is configured to generate a corrected image based on: the outcome signal output from the outer shape detection unit (331); the outer shape signal output from the outer shape detection unit (331); and the read image of the object that is read by the image reading unit (303). The size detection unit (333) is configured to detect a size of the object being conveyed. The output image generation unit (334) is configured to generate an output image from the corrected image, based on: the mode set by the mode setting unit (321); and the size of the object detected by the size detection unit (333).

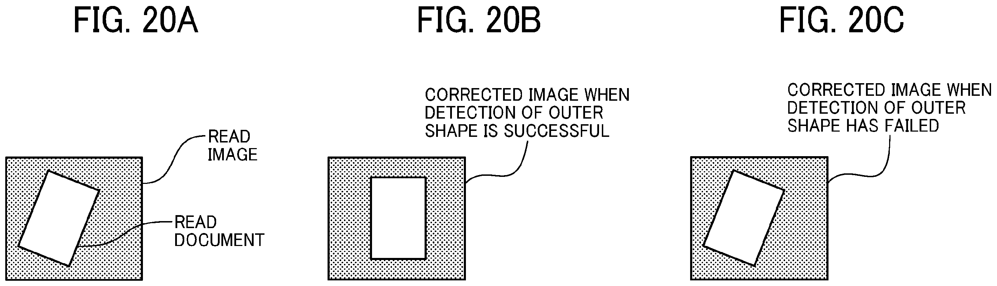

FIGs. 20A, 20B, and 20C are diagrams illustrating examples of a read image and a corrected image. FIG. 20A illustrates an example of a read image that has been read by the image reading unit 303. FIG. 20B illustrates an example of a corrected image obtained when the detection of the outer shape by the outer shape detection unit 331 is successful. FIG. 20C illustrates an example of a corrected image obtained when the detection of the outer shape by the outer shape detection unit 331 has failed.

As illustrated in FIG. 20B, when the detection of the outer shape is successful, the corrected image generation unit 332 corrects the document to an upright position by rotation based on the information on the skew and misregistration included in the outer shape signal, and generates a corrected image in which the position of the document is aligned with, for example, the center position of the read image. In the registration correction, the corrected image generation unit 332 may generate a corrected image in which the document is aligned with any one of the upper, lower, left, and right edges of the read image.

As illustrated in FIG. 20C, if the detection of the outer shape has failed, the corrected image generation unit 332 does not correct the read image and generates the read image as it is as a corrected image.

The size detection unit 333 detects a document size. The document size includes a document width and a document length.

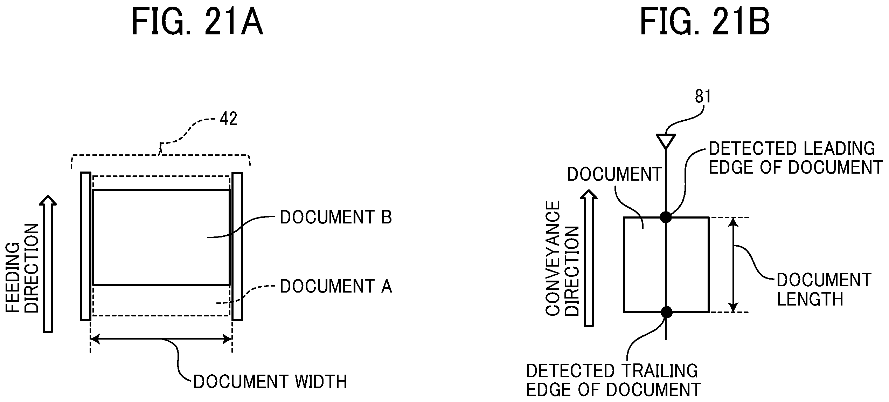

FIGs. 21A and 21B are diagrams illustrating examples of a document size detected by the size detection unit 333. FIG. 21A illustrates an example of a document width when documents A and B having an equal width are placed on the document tray 11. FIG. 21B illustrates an example of a document length detected using the leading edge and the trailing edge of a document being conveyed.

As illustrated in FIG. 21A, when multiple documents having an equal width are placed, the size detection unit 333 detects, as the document width, the maximum width set by the maximum size setting unit 301. When multiple documents having an equal size are placed, the size detection unit 333 detects, as the document width and the document length, the maximum width and the maximum length set by the maximum size setting unit 301, respectively.

As illustrated in FIG. 21B, when the leading edge and the trailing edge of a document being conveyed are used, the size detection unit 333 calculates the document length using, for example, the conveyance speed and the time difference between the time at which the registration sensor 81 detects the leading edge of the document and the time at which the registration sensor 81 detects the trailing edge of the document. The size detection unit 333 may calculate the document length in a manner similar to that described above using the contact sensor 84 instead of the registration sensor 81.

The size detection unit 333 may detect the document width using the output of the document width sensor 85. Alternatively, the size detection unit 333 may calculate the document size through image processing. For example, the size detection unit 333 can use a difference in density or color between the background member 92 and the document included in the read image to detect the boundary, and calculate the document size from the detected boundary.

The output image generation unit 334 generates an output image from the corrected image, based on the mode set by the mode setting unit 321 and the size of the document detected by the size detection unit 333.

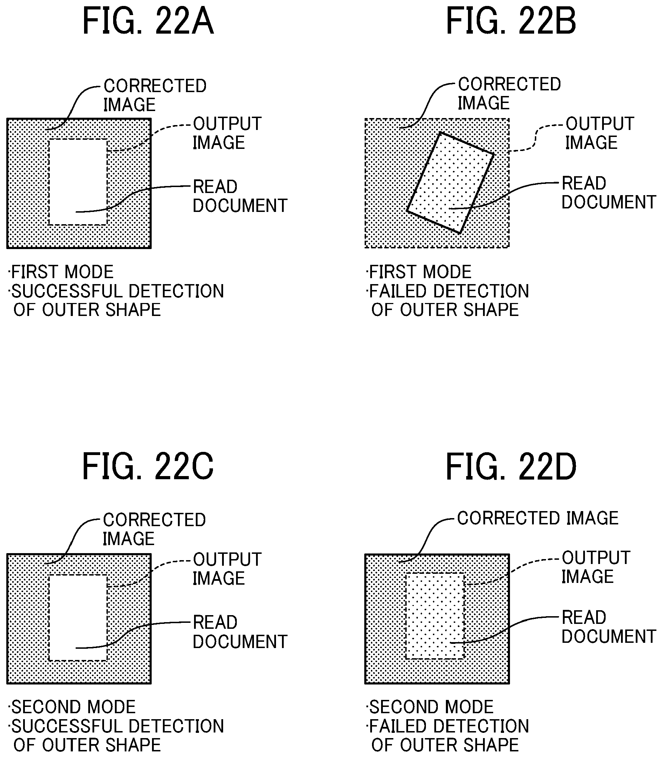

FIGs. 22A, 22B, 22C, and 22D are diagrams illustrating examples of a corrected image and an output image. FIG. 22A illustrates a case where the detection of the outer shape is successful in the first mode. FIG. 22B illustrates a case where the detection of the outer shape has failed in the first mode. FIG. 22C illustrates a case where the detection of the outer shape is successful in the second mode. FIG. 22D illustrates a case where the detection of the outer shape has failed in the second mode.

In a case where the detection of the outer shape is successful in the first mode, the corrected image is an image as illustrated in FIG. 22A in which the skew and the misregistration are corrected. In this case, the output image generation unit 334 performs cropping based on the document size detected by the size detection unit 333 to crop an area indicated by a dashed line from the corrected image, and generates an output image.

On the other hand, in a case where the detection of the outer shape has failed in the first mode, multiple documents having different widths are placed on the document tray 11 and are likely to be skewed or misregistered greatly. In this case, as illustrated in FIG. 22B, large tilt or misregistration is present in the corrected image. In addition, the reliability of the document size detected by the size detection unit 333 is also low. Thus, if an output image is cropped based on such a low-reliability document size, part of the document may be missing. Accordingly, the output image generation unit 334 generates the read image as an output image without performing cropping from the read image. As a result, an image in which the area of the background member 92 remains but no missing part of the document is present can be output.

In the second mode, the output image generation unit 334 performs cropping based on the document size detected by the size detection unit 333 regardless of whether the detection of the outer shape is successful (i.e., regardless of the outcome signal). As illustrated in FIGs. 22C and 22D, the output image generation unit 334 crops an area indicated by a dashed line from the corrected image to generate an output image. In the second mode, multiple documents having an equal width are placed on the document tray 11, and the left and right edges of the documents are put against the side guide plates 42 to ensure a reduction in skew and misregistration, resulting in a small missing part of the documents. Thus, the cropping operation described above can be carried out.

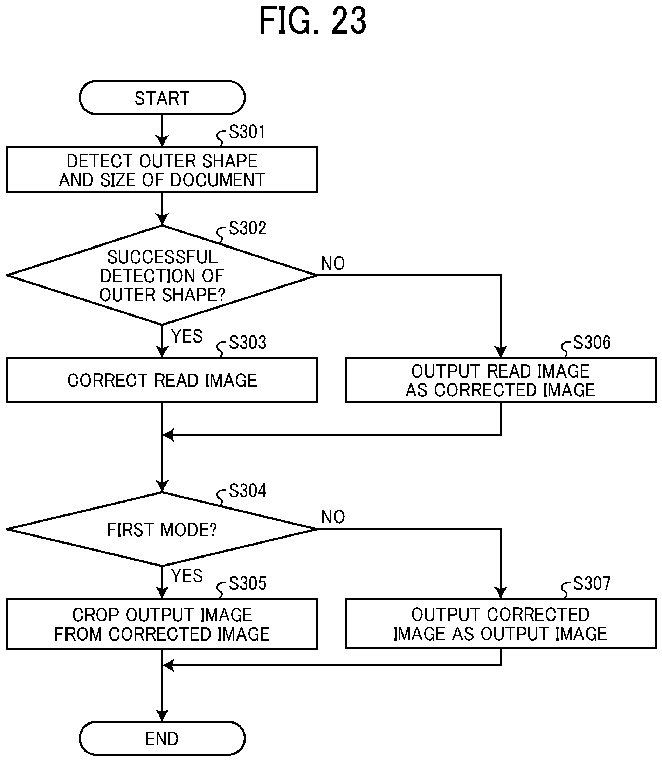

FIG. 23 is a flowchart illustrating an example of a procedure of an output image generation process according to the third embodiment. First, the outer shape detection unit 331 detects the outer shape of the document, and the size detection unit 333 detects the size of the document (step S301).

If the detection of the outer shape by the outer shape detection unit 331 is successful (step S302: Yes), the corrected image generation unit 332 corrects the read image (step S303). On the other hand, if the detection of the outer shape by the outer shape detection unit 331 is not successful (step S302: No), the corrected image generation unit 332 outputs the read image as a corrected image (step S306).

The corrected image generation unit (332) is configured to generate the corrected image from the read image through a correction based on the outer shape signal when the outcome signal indicates that the detection of the outer shape is successful; and generate the read image as the corrected image when the outcome signal indicates that the detection of the outer shape is not successful.

If the mode setting unit 321 sets the first mode (step S304: Yes), the output image generation unit 334 crops an output image from the corrected image (step S305). On the other hand, if the mode setting unit 321 sets the second mode (step S304: No), the output image generation unit 334 outputs the corrected image as an output image (step S307).

The corrected image generation unit (332) is configured to, in a case where the first mode is set by the mode setting unit (321), generate the output image from the corrected image through cropping based on the size of the object being conveyed, when the outcome signal indicates that the detection of the outer shape is successful, and generate the corrected image as the output image when the outcome signal indicates that the detection of the outer shape is not successful. The corrected image generation unit (332) is further configured to, in a case where the second mode is set by the mode setting unit (321), generate the output image from the corrected image through cropping based on the size of the object being conveyed, regardless of the outcome signal.

As described above, according to the present embodiment, the outer shape and size of a document are detected using a read image including no missing part of the document, and correction of skew or misregistration and copping of an output image are performed. As a result, a high-quality image can be generated. Even if the detection of the outer shape has failed, an output image including no missing part of a document can be generated.

The detection of the outer shape of the object being conveyed includes a detection of tilt or misregistration of the object being conveyed.

The above-described embodiments of the present disclosure provide an image forming apparatus applicable to a multifunction peripheral having at least two of the following functions: copying, printing, scanning, and facsimile transmission, by way of example but not limitation. The present disclosure is applicable to any image forming apparatus such as a copying machine, a printer, a scanner, or a facsimile machine.

**In** the foregoing description, the image processing unit 200 is included in the image forming apparatus 100. However, the image processing unit 200 may be included in a device external to the image forming apparatus 100 (i.e., an external device). **In** this case, the external device is communicably connected to the scanner 101 and the ADF 102.

The program to be executed by the image reading device according to each of the embodiments described above is recorded on and provided through a computer-readable recording medium, such as a CD-ROM, an FD, a CD-R, or a DVD, in an installable or executable file format.

The program to be executed by the image reading device according to each embodiment may be configured to be stored in a computer connected to a network such as the Internet and provided by being downloaded via the network. The program to be executed by the image reading device according to each embodiment may be configured to be provided or distributed via a network such as the Internet.

In addition, the program according to each embodiment may be configured to be provided in a pre-installed manner in a ROM or the like.

The program to be executed by the image reading device according to each embodiment has a module configuration including the components described above, such as the maximum size setting unit 301, the reading area setting unit 302, and the image reading unit 303. In actual hardware, the CPU (processor) reads the program from the recording medium described above and executes the program to load the components onto a main storage device and generate the components on the main storage device.

Each of the functions of the embodiments described above can be implemented by one or more processing circuits or circuitry. The term "processing circuit" or "processing circuitry", as used herein, includes a processor programmed to implement each function by software, such as a processor implemented by an electronic circuit, and devices designed to implement the functions described above, such as an ASIC, a digital signal processor (DSP), a field programmable gate array (FPGA), and existing circuit modules.

The embodiments according to the present disclosure have been described above; however, the above-described embodiments have been provided as examples, and are not intended to limit the scope of the present disclosure. The new embodiments may be implemented in a variety of other forms; furthermore, various omissions, substitutions, and changes in the forms may be made without departing from the gist and scope of the disclosure. The embodiments and modifications thereof are included in the scope and gist of the disclosure, and are included in the disclosure described in the claims and the equivalents of the disclosure. Components according to different embodiments and modifications may be combined as appropriate.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

For example, aspects of the present disclosure include the following.

In a first aspect, an image reading device includes a maximum size setting unit, a reading area setting unit, a target detection unit, and an image reading unit. The maximum size setting unit sets a maximum size including a maximum width and a maximum length of multiple conveyance target objects to be conveyed. The reading area setting unit sets a length of a reading area and a first length. The length of the reading area and the first length are determined in accordance with the maximum size set by the maximum size setting unit. The length of the reading area is a reading length used to read a conveyance target object being conveyed among the multiple conveyance target objects. The first length is a reading length to be read downstream of a leading edge of the conveyance target object being conveyed in a conveyance direction of the conveyance target object being conveyed. The target detection unit detects the leading edge of the conveyance target object being conveyed. The image reading unit starts reading an image at a position located downstream of the leading edge detected by the target detection unit by a distance equal to the first length in the conveyance direction, and terminates reading the image in response to a length that has been read reaching the length of the reading area.

According to a second aspect, in the image reading device of the first aspect, the reading area setting unit sets the first length to a value that is independent of the maximum size, and sets the length of the reading area to a value that depends on the maximum size.

According to a third aspect, in the image reading device of the first aspect, the reading area setting unit sets the first length to a value that depends on the maximum size, and sets the length of the reading area to a value that depends on the maximum size.

According to a fourth aspect, the image reading device of the first aspect or the second aspect further includes a mode setting unit. The mode setting unit sets one of a first mode and a second mode. The first mode is a mode in which at least one of the multiple conveyance target objects has a different width. The second mode is a mode in which the multiple conveyance target objects have an equal width. The reading area setting unit sets a reading length used to read the conveyance target object being conveyed in accordance with the mode set by the mode setting unit.

According to a fifth aspect, in the image reading device of the fourth aspect, the target detection unit further detects a trailing edge of the conveyance target object being conveyed. Based on a setting of the first mode by the mode setting unit, the reading area setting unit sets the first length and the length of the reading area, and the image reading unit starts reading the image at the position located downstream of the leading edge of the conveyance target object being conveyed by the distance equal to the first length in the conveyance direction, and terminates reading the image in response to a length that has been read reaching the length of the reading area. Based on a setting of the second mode by the mode setting unit, the reading area setting unit sets a second length and a third length, the second length being a reading length to be read downstream of the leading edge of the conveyance target object being conveyed in the conveyance direction, the third length being a reading length to be read upstream of the trailing edge of the conveyance target object being conveyed in the conveyance direction, and the image reading unit starts reading the image at a position located downstream of the leading edge of the conveyance target object being conveyed by a distance equal to the second length in the conveyance direction, and terminates reading the image at a position located upstream of the trailing edge of the conveyance target object being conveyed by a distance equal to the third length in the conveyance direction.

According to a sixth aspect, the image reading device of the fourth aspect or the fifth aspect further includes an outer shape detection unit, a corrected image generation unit, a size detection unit, and an output image generation unit. The outer shape detection unit detects an outer shape of the conveyance target object being conveyed and outputs an outcome signal indicating whether a detection of the outer shape is successful and an outer shape signal indicating the outer shape. The corrected image generation unit generates a corrected image based on the outcome signal output from the outer shape detection unit, the outer shape signal output from the outer shape detection unit, and a read image that is read by the image reading unit. The size detection unit detects a size of the conveyance target object being conveyed. The output image generation unit generates an output image from the corrected image, based on the mode set by the mode setting unit and the size of the conveyance target object being conveyed detected by the size detection unit.

According to a seventh aspect, in the image reading device of the sixth aspect, in a case where the mode is the first mode, the corrected image generation unit generates the output image from the corrected image through cropping based on the size of the conveyance target object being conveyed, when the outcome signal indicates that the detection of the outer shape is successful, and generates the corrected image as the output image when the outcome signal indicates that the detection of the outer shape is not successful, and in a case where the mode is the second mode, the corrected image generation unit generates the output image from the corrected image through cropping based on the size of the conveyance target object being conveyed, regardless of the outcome signal.

According to an eighth aspect, in the image reading device of the sixth aspect or the seventh aspect, the detection of the outer shape of the conveyance target object being conveyed includes a detection of tilt or misregistration of the conveyance target object being conveyed.

According to a ninth aspect, in the image reading device of any one of the sixth to eighth aspects, the corrected image generation unit generates the corrected image from the read image through a correction based on the outer shape signal when the outcome signal indicates that the detection of the outer shape is successful, and generates the read image as the corrected image when the outcome signal indicates that the detection of the outer shape is not successful.

According to a tenth aspect, in the image reading device of any one of the first to ninth aspects, the reading area setting unit sets at least one of the length of the reading area and the first length in accordance with a conveyance speed of the conveyance target object being conveyed.

According to an eleventh aspect, in the image reading device of the fifth aspect, the reading area setting unit sets at least one of the length of the reading area, the first length, the second length, and the third length in accordance with a conveyance speed of the conveyance target object being conveyed.

According to a twelfth aspect, in the image reading device of any one of the first to eleventh aspects, the maximum size setting unit sets the maximum width and the maximum length, based on an output of a first sensor that detects a width of the multiple conveyance target objects and an output of a second sensor that detects a length of the multiple conveyance target objects.

**In** a thirteenth aspect, an image forming apparatus includes the image reading device of any one of the first to twelfth aspects and an image former. The image former forms an image on a medium, based on an image read by the image reading device.

In a fourteenth aspect, an image reading method executed by an image reading device includes setting a maximum size including a maximum width and a maximum length of multiple conveyance target objects to be conveyed; setting a length of a reading area and a first length, the length of the reading area and the first length being determined in accordance with the maximum size set in the setting of the maximum size, the length of the reading area being a reading length used to read a conveyance target object being conveyed among the multiple conveyance target objects, the first length being a reading length to be read downstream of a leading edge of the conveyance target object being conveyed in a conveyance direction of the conveyance target object being conveyed; detecting the leading edge of the conveyance target object being conveyed; and starting reading an image at a position located downstream of the leading edge detected in the detecting by a distance equal to the first length in the conveyance direction, and terminating reading the image in response to a length that has been read reaching the length of the reading area.

## Claims

1. An image reading device comprising:
a target detection unit (81) configured to detect a leading edge of an object of multiple objects conveyed in a conveyance direction;
a maximum size setting unit (301) configured to set a maximum size of the multiple objects including:
a maximum width; and
a maximum length;
a reading area setting unit (302) configured to:
determine and set an entire reading length of a reading area in the object in the conveyance direction in accordance with the maximum size; and
determine and set an extended reading length of an extended portion of the object in the conveyance direction,
the extended portion disposed downstream of the leading edge of the object, detected by the target detection unit (81), in the conveyance direction;
an image reading unit (303) configured to:
start reading, an image on the extended portion in the object, at an extended position downstream of the leading edge by the extended reading length in the conveyance direction; and
terminate reading the image on the object when a reading length that has been read reaches the entire reading length of the reading area.

2. The image reading device according to claim 1, wherein:
the reading area setting unit (302) is configured to:
set the extended reading length to a value that is independent of the maximum size; and
set the entire reading length of the reading area to a value that depends on the maximum size.

3. The image reading device according to claim 1, wherein:
the reading area setting unit (302) is configured to:
set the extended reading length to a value that depends on the maximum size; and
set the entire reading length of the reading area to a value that depends on the maximum size.

4. The image reading device according to claim 1 or 2, further comprising:
a mode setting unit (321) configured to:
set a mode, including:
a first mode performed when at least one of the multiple objects has a different width; or
a second mode performed when the multiple objects have an equal width, wherein
the reading area setting unit (302) is configured to set the entire reading length of the reading area in accordance with the first mode or the second mode previously set by the mode setting unit (321).

5. The image reading device according to claim 4, wherein:
the target detection unit (81) is configured to further detect a trailing edge of the object,
the reading area setting unit (302) is configured to set, when the first mode is set by the mode setting unit (321):
the extended reading length as a first reading length and the entire reading length of the reading area,
the image reading unit (303) is configured to:
start reading the image on the object at the extended position as a first position downstream of the leading edge by the first reading length in the conveyance direction; and
terminate reading the image on the object when a reading length that has been read reaches the entire reading length of the reading area,
the reading area setting unit (302) is configured to set, when the second mode is set by the mode setting unit (321):
a second reading length of the entire reading length in the conveyance direction,
the second reading length corresponding to a second portion to be read downstream of the leading edge of the object in the conveyance direction; and
a third reading length of the reading area in the conveyance direction,
the third reading length corresponding to a third portion to be read upstream of the trailing edge of the object in the conveyance direction, and
the image reading unit (303) is configured to:
start reading the image on the object at a second position downstream of the leading edge of the object by the second reading length in the conveyance direction; and
terminate reading the image on the object at a third position upstream of the trailing edge of the object by the third reading length in the conveyance direction.

6. The image reading device according to claim 4 or 5, further comprising:
an outer shape detection unit (331) configured to:
detect an outer shape of the object; and
output:
an outcome signal indicating whether a detection of the outer shape is successful; and
an outer shape signal indicating the outer shape;
a corrected image generation unit (332) configured to generate a corrected image based on:
the outcome signal output from the outer shape detection unit (331);
the outer shape signal output from the outer shape detection unit (331); and
the read image of the object that is read by the image reading unit (303);
a size detection unit (333) configured to detect a size of the object being conveyed; and
an output image generation unit (334) configured to generate an output image from the corrected image, based on:
the mode set by the mode setting unit (321); and
the size of the object detected by the size detection unit (333).

7. The image reading device according to claim 6, wherein:
the corrected image generation unit (332) is configured to:
in a case where the first mode is set by the mode setting unit (321),
generate the output image from the corrected image through cropping based on the size of the object being conveyed, when the outcome signal indicates that the detection of the outer shape is successful, and
generate the corrected image as the output image when the outcome signal indicates that the detection of the outer shape is not successful; and
in a case where the second mode is set by the mode setting unit (321),
generate the output image from the corrected image through cropping based on the size of the object being conveyed, regardless of the outcome signal.

8. The image reading device according to claim 6 or 7, wherein:
the detection of the outer shape of the object being conveyed includes a detection of tilt or misregistration of the object being conveyed.

9. The image reading device according to any one of claims 6 to 8, wherein:
the corrected image generation unit (332) is configured to:
generate the corrected image from the read image through a correction based on the outer shape signal when the outcome signal indicates that the detection of the outer shape is successful; and
generate the read image as the corrected image when the outcome signal indicates that the detection of the outer shape is not successful.

10. The image reading device according to any one of claims 1 to 9, wherein:
the reading area setting unit (302) is configured to:
set at least one of:
the entire reading length of the reading area; and
the extended reading length
in accordance with a conveyance speed of the object being conveyed.

11. The image reading device according to claim 5, wherein:
the reading area setting unit (302) is configured to:
set at least one of:
the entire reading length of the reading area;
the first reading length;
the second reading length; and
the third reading length
in accordance with a conveyance speed of the object being conveyed.

12. The image reading device according to any one of claims 1 to 11, further comprising another sensor to detect the multiple objects including the object to be conveyed in the conveyance direction, wherein:
said another sensor includes:
a first sensor (89) to:
detect widths of the multiple objects; and
output the widths of the multiple objects detected; and
a second sensor (90) to:
detect lengths of the multiple objects; and
output the lengths of the multiple objects detected, wherein:
the maximum size setting unit (301) is configured to:
set the maximum width and the maximum length, based on:
the widths of the multiple objects output from the first sensor (89); and
the lengths of the multiple objects output from the second sensor (90).

13. An image forming apparatus comprising:
the image reading device (101, 102, 200) according to any one of claims 1 to 12; and
an image former (120) to form an image on a medium, based on the read image read by the image reading device (101, 102, 200).

14. An image reading method executed by an image reading device, the image reading method comprising:
setting (S100; S211) a maximum size of multiple objects including:
a maximum width; and
a maximum length;
determining and setting (S100; S211) an entire reading length of a reading area in an object of the multiple objects in a conveyance direction in accordance with the maximum size, the object conveyed in the conveyance direction;
determining and setting (S100; S211) an extended reading length of an extended portion of the object in the conveyance direction,
the extended portion disposed downstream of a leading edge of the object, in the conveyance direction;
detecting (102; S213) the leading edge of the object conveyed in the conveyance direction;
starting (S103; S214; S223) reading, an image on the extended portion in the object, at an extended position downstream of the leading edge by the extended reading length in the conveyance direction; and
terminating (S105; S216) reading the image on the object when a reading length that has been read reaches the entire reading length of the reading area.

## Patentansprüche

1. Ein Bildlesegerät, umfassend:
eine Zielerkennungseinheit (81), die dazu eingerichtet ist, eine Vorderkante eines Objekts aus mehreren Objekten zu erfassen, die in einer Förderrichtung befördert werden;
eine Maximalgrößen-Einstellungseinheit (301), die dazu eingerichtet ist, eine maximale Größe der mehreren Objekte festzulegen, einschließlich:
einer maximalen Breite; und
einer maximalen Länge;
eine Lesebereich-Einstellungseinheit (302), die dazu eingerichtet ist:
eine gesamte Leselänge eines Lesebereichs des Objekts in Förderrichtung entsprechend der maximalen Größe zu bestimmen und festzulegen; und
eine erweiterte Leselänge eines erweiterten Abschnitts des Objekts in Förderrichtung zu bestimmen und festzulegen,
wobei der erweiterte Abschnitt in Förderrichtung stromabwärts der von der Zielerfassungseinheit (81) erfassten Vorderkante des Objekts angeordnet ist;
eine Bildleseeinheit (303), die dazu eingerichtet ist, dass sie:
mit dem Lesen eines Bildes auf dem erweiterten Abschnitt des Objekts an einer um die erweiterte Leselänge in Förderrichtung stromabwärts von der Vorderkante gelegenen Position beginnt; und
das Lesen des Bildes auf dem Objekt beendet, wenn eine bereits gelesene Leselänge die gesamte Leselänge des Lesebereichs erreicht.

2. Das Bildlesegerät nach Anspruch 1, wobei:
die Lesebereich-Einstellungseinheit (302) dazu eingerichtet ist, dass sie:
die erweiterte Leselänge auf einen Wert einstellt, der unabhängig von der maximalen Größe ist; und
die gesamte Leselänge des Lesebereichs auf einen Wert einstellt, der von der maximalen Größe abhängt.

3. Das Bildlesegerät nach Anspruch 1, wobei:
die Lesebereich-Einstellungseinheit (302) dazu eingerichtet ist, dass sie:
die erweiterte Leselänge auf einen Wert einstellt, der von der maximalen Größe abhängt; und
die gesamte Leselänge des Lesebereichs auf einen Wert einstellt, der von der maximalen Größe abhängt.

4. Das Bildlesegerät nach Anspruch 1 oder 2, das ferner umfasst:
eine Modus-Einstellungseinheit (321), die dazu eingerichtet ist, dass sie:
einen Modus einstellt, einschließlich:
eines ersten Modus, der ausgeführt wird, wenn mindestens eines der mehreren Objekte eine unterschiedliche Breite aufweist; oder
eines zweiten Modus, der ausgeführt wird, wenn die mehreren Objekte eine gleiche Breite aufweisen, wobei
die Lesebereich-Einstellungseinheit (302) dazu eingerichtet ist, die gesamte Leselänge des Lesebereichs entsprechend dem zuvor von der Modus-Einstellungseinheit (321) eingestellten ersten oder zweiten Modus einzustellen.

5. Das Bildlesegerät nach Anspruch 4, wobei:
die Zielerkennungseinheit (81) dazu eingerichtet ist, eine Hinterkante des Objekts zu erfassen,
die Lesebereich-Einstellungseinheit (302) dazu eingerichtet ist, dass sie, wenn der erste Modus von der Modus-Einstellungseinheit (321) eingestellt ist:
die erweiterte Leselänge als erste Leselänge und die gesamte Leselänge des Lesebereichs festzulegen,
die Bildleseeinheit (303) dazu eingerichtet ist, dass sie:
das Lesen des Bildes auf dem Objekt an der erweiterten Position als erste Position um die erste Leselänge in Förderrichtung stromabwärts der Vorderkante beginnt; und
das Lesen des Bildes auf dem Objekt zu beenden, wenn eine bereits gelesene Leselänge die gesamte Leselänge des Lesebereichs erreicht;
die Lesebereich-Einstellungseinheit (302) dazu eingerichtet ist, dass sie, wenn der zweite Modus durch die Modus-Einstellungseinheit (321) eingestellt wird, Folgendes festlegt:
eine zweite Leselänge in Höhe der gesamten Leselänge in Förderrichtung,
wobei die zweite Leselänge einem zweiten zu lesenden Abschnitt stromabwärts der Vorderkante des Objekts in Förderrichtung entspricht; und
eine dritte Leselänge des Lesebereichs in Förderrichtung,
wobei die dritte Leselänge einem dritten zu lesenden Abschnitt stromaufwärts der Hinterkante des Objekts in Förderrichtung entspricht, und
die Bildleseeinheit (303) ist dazu eingerichtet, dass sie:
das Lesen des Bildes auf dem Objekt an einer zweiten Position um die zweite Leselänge in Förderrichtung stromabwärts der Vorderkante des Objekts beginnt; und
das Lesen des Bildes auf dem Objekt an einer dritten Position um die dritte Leselänge in Förderrichtung stromaufwärts der Hinterkante des Objekts beendet.

6. Das Bildlesegerät nach Anspruch 4 oder 5, ferner umfassend:
eine Außenform-Erfassungseinheit (331), die dazu eingerichtet ist, dass sie:
eine Außenform des Objekts erfasst; und
Folgendes ausgibt:
ein Ergebnissignal, das angibt, ob die Erfassung der Außenform erfolgreich war; und
ein Außenformsignal, das die Außenform angibt;
eine Einheit zur Erzeugung eines korrigierten Bildes (332), die dazu eingerichtet ist, ein korrigiertes Bild auf der Grundlage folgender Elemente zu erzeugen:
des von der Einheit zur Erfassung der Außenform (331) ausgegebenen Ergebnissignals;
des von der Einheit zur Erfassung der Außenform (331) ausgegebenen Außenformsignals; und
des von der Bildleseeinheit (303) gelesenen Bildes des Objekts;
eine Größenerfassungseinheit (333), die dazu eingerichtet ist, eine Größe des beförderten Objekts zu erfassen; und
eine Ausgabebild-Erzeugungseinheit (334), die dazu eingerichtet ist, aus dem korrigierten Bild ein Ausgabebild zu erzeugen, basierend auf:
dem von der Modus-Einstellungseinheit (321) eingestellten Modus; und
der von der Größenerfassungseinheit (333) erfassten Größe des Objekts.

7. Das Bildlesegerät nach Anspruch 6, wobei:
die Einheit zur Erzeugung des korrigierten Bildes (332) dazu eingerichtet ist, dass sie:
in einem Fall, in dem der erste Modus von der Modus-Einstellungseinheit (321) eingestellt ist,
das Ausgabebild aus dem korrigierten Bild durch Zuschneiden auf der Grundlage der Größe des beförderten Objekts erzeugt, wenn das Ergebnissignal anzeigt, dass die Erfassung der Außenform erfolgreich ist, und
das korrigierte Bild als Ausgabebild zu erzeugen, wenn das Ergebnissignal anzeigt, dass die Erkennung der Außenform nicht erfolgreich ist; und
in einem Fall, in dem der zweite Modus durch die Modus-Einstellungseinheit (321) eingestellt ist,
das Ausgabebild aus dem korrigierten Bild durch Zuschneiden auf der Grundlage der Größe des beförderten Objekts zu erzeugen, unabhängig vom Ergebnissignal.

8. Das Bildlesegerät nach Anspruch 6 oder 7, wobei:
die Erkennung der Außenform des zu transportierenden Objekts eine Erkennung einer Neigung oder eines Versatzes des zu transportierenden Objekts umfasst.

9. Das Bildlesegerät nach einem der Ansprüche 6 bis 8, wobei:
die Einheit zur Erzeugung des korrigierten Bildes (332) dazu eingerichtet ist, dass sie:
das korrigierte Bild aus dem gelesenen Bild durch eine Korrektur auf der Grundlage des Außenformsignals erzeugt, wenn das Ergebnissignal anzeigt, dass die Erfassung der Außenform erfolgreich ist; und
das gelesene Bild als das korrigierte Bild erzeugt, wenn das Ergebnissignal anzeigt, dass die Erfassung der Außenform nicht erfolgreich ist.

10. Das Bildlesegerät nach einem der Ansprüche 1 bis 9, wobei:
die Lesebereich-Einstellungseinheit (302) dazu eingerichtet ist, dass sie:
mindestens eines der folgenden festlegt:
die gesamte Leselänge des Lesebereichs; und
die erweiterte Leselänge
entsprechend einer Fördergeschwindigkeit des zu transportierenden Objekts.

11. Das Bildlesegerät nach Anspruch 5, wobei:
die Lesebereich-Einstellungseinheit (302) dazu eingerichtet ist, dass sie:
mindestens eines der folgenden festlegt:
die gesamte Leselänge des Lesebereichs;
die erste Leselänge;
die zweite Leselänge; und
die dritte Leselänge
entsprechend einer Fördergeschwindigkeit des zu fördernden Objekts.

12. Das Bildlesegerät nach einem der Ansprüche 1 bis 11, die ferner einen weiteren Sensor umfasst, um die mehreren Objekte einschließlich des zu befördernden Objekts in der Förderrichtung zu erfassen, wobei:
der weitere Sensor umfasst:
einen ersten Sensor (89), der:
die Breiten der mehreren Objekte erfasst; und
die erfassten Breiten der mehreren Objekte ausgibt; und
einen zweiten Sensor (90), der:
die Längen der mehreren Objekte erfasst; und
die erfassten Längen der mehreren Objekte ausgibt, wobei:
die Maximalgrößen-Einstellungseinheit (301) dazu eingerichtet ist, dass sie:
die maximale Breite und die maximale Länge festlegt, basierend auf:
den vom ersten Sensor (89) ausgegebenen Breiten der mehreren Objekte; und
die vom zweiten Sensor (90) ausgegebenen Längen der mehreren Objekte.

13. Eine Bilderzeugungsvorrichtung, umfassend:
die Bildlesevorrichtung (101, 102, 200) gemäß einem der Ansprüche 1 bis 12; und
einen Bilderzeuger (120) zum Erzeugen eines Bildes auf einem Medium auf der Grundlage des von der Bildlesevorrichtung (101, 102, 200) gelesenen Bildes.

14. Ein Bildleseverfahren, das von einem Bildlesegerät ausgeführt wird, wobei das Bildleseverfahren umfasst:
das Festlegen (S100; S211) einer maximalen Größe mehrerer Objekte, einschließlich:
einer maximalen Breite; und
einer maximalen Länge;
das Ermitteln und Festlegen (S100; S211) einer gesamten Leselänge eines Lesebereichs in einem der mehreren Objekte in einer Förderrichtung entsprechend der maximalen Größe, wobei das Objekt in der Förderrichtung befördert wird;
das Ermitteln und das Festlegen (S100; S211) einer erweiterten Leselänge eines in Transportrichtung erweiterten Abschnitts des Objekts,
wobei der erweiterte Abschnitt in Transportrichtung stromabwärts einer Vorderkante des Objekts angeordnet ist;
das Erfassen (102; S213) der Vorderkante des in Transportrichtung beförderten Objekts;
das Starten (S103; S214; S223) des Lesens eines Bildes auf dem erweiterten Abschnitt des Objekts an einer um die erweiterte Leselänge in Förderrichtung stromabwärts der Vorderkante gelegenen Position; und
das Beenden (S105; S216) des Lesens des Bildes auf dem Objekt, wenn eine bereits gelesene Leselänge die gesamte Leselänge des Lesebereichs erreicht.

## Revendications

1. Dispositif de lecture d'images comprenant :
une unité de détection de cible (81) conçue pour détecter le bord avant d'un objet parmi de multiples objets transportés dans un sens de transport,
une unité de réglage de taille maximale (301) conçue pour régler la taille maximale des multiples objets dont :
la largeur maximale, et
la longueur maximale ;
une unité de réglage de zone de lecture (302) conçue pour :
déterminer et régler une longueur de lecture totale d'une zone de lecture présente dans l'objet dans le sens du transport en fonction de la taille maximale, et
déterminer et régler une longueur de lecture étendue d'une partie étendue de l'objet dans le sens du transport ;
la partie étendue étant située en aval du bord avant de l'objet détecté par l'unité de détection de cible (81), dans le sens du transport ;
une unité de lecture d'image (303) conçue pour :
commencer la lecture d'une image sur la partie étendue de l'objet, en une position étendue en aval du bord avant de la longueur de lecture étendue dans le sens du transport, et
mettre fin à la lecture de l'image sur l'objet lorsqu'une longueur de lecture qui a été lue atteint la longueur de lecture totale de la zone de lecture.

2. Dispositif de lecture d'images selon la revendication 1, dans lequel :
l'unité de réglage de zone de lecture (302) est conçue pour :
régler la longueur de lecture étendue à une valeur indépendante de la taille maximale, et
régler la longueur de lecture totale de la zone de lecture à une valeur qui dépend de la taille maximale.

3. Dispositif de lecture d'images selon la revendication 1, dans lequel :
l'unité de réglage de zone de lecture (302) est conçue pour :
régler la longueur de lecture étendue à une valeur qui dépend de la taille maximale, et
régler la longueur de lecture totale de la zone de lecture à une valeur qui dépend de la taille maximale.

4. Dispositif de lecture d'images selon la revendication 1 ou 2, comprenant en outre :
une unité de réglage de mode (321) conçue pour :
régler un mode, dont :
un premier mode exécuté lorsqu'au moins l'un des multiples objets présente une largeur différente, ou
un deuxième mode exécuté lorsque les multiples objets présentent une largeur égale ;
l'unité de réglage de zone de lecture (302) étant conçue pour régler la longueur totale de lecture de la zone de lecture conformément au premier mode ou au deuxième mode précédemment réglé par l'unité de réglage de mode (321).

5. Dispositif de lecture d'images selon la revendication 4, dans lequel :
l'unité de détection de cible (81) est conçue pour détecter en outre un bord arrière de l'objet ;
l'unité de réglage de zone de lecture (302) est conçue pour régler, lorsque le premier mode est réglé par l'unité de réglage de mode (321) :
la longueur de lecture étendue en tant que première longueur de lecture et la longueur de lecture totale de la zone de lecture ;
l'unité de lecture d'image (303) est conçue pour :
commencer la lecture de l'image sur l'objet à la position étendue comme première position en aval du bord avant sur la première longueur de lecture dans le sens du transport, et
mettre fin à la lecture de l'image sur l'objet lorsqu'une longueur de lecture qui a été lue atteint la longueur de lecture totale de la zone de lecture ;
l'unité de réglage de zone de lecture (302) est conçue pour régler, lorsque le deuxième mode est réglé par l'unité de réglage de mode (321) :
une deuxième longueur de lecture faisant partie de la longueur de lecture totale dans le sens du transport,
la deuxième longueur de lecture correspondant à une deuxième partie à lire en aval du bord avant de l'objet dans le sens du transport, et
une troisième longueur de lecture faisant partie de la zone de lecture dans le sens du transport,
la troisième longueur de lecture correspondant à une troisième partie à lire en amont du bord arrière de l'objet dans le sens du transport ; et
l'unité de lecture d'image (303) est conçue pour :
commencer la lecture de l'image sur l'objet en une deuxième position en aval du bord avant de l'objet selon la deuxième longueur de lecture dans le sens du transport, et
mettre fin à la lecture de l'image sur l'objet en une troisième position en amont du bord arrière de l'objet selon la troisième longueur de lecture dans le sens du transport.

6. Dispositif de lecture d'images selon la revendication 4 ou 5, comprenant en outre :
une unité de détection de forme extérieure (331) conçue pour :
détecter la forme extérieure de l'objet, et
communiquer :
un signal de résultat indiquant si la détection de la forme extérieure a réussi, et
un signal de forme extérieure indicatif de la forme extérieure ;
une unité de génération d'image corrigée (332) conçue pour générer une image corrigée en fonction :
du signal de résultat communiqué par l'unité de détection de forme extérieure (331),
du signal de forme extérieure communiqué par l'unité de détection de forme extérieure (331), et
de l'image de l'objet lue par l'unité de lecture d'image (303) ;
une unité de détection de taille (333) conçue pour détecter la taille de l'objet transporté, et
une unité de génération d'image de sortie (334) conçue pour générer une image de sortie à partir de l'image corrigée, en fonction :
du mode réglé par l'unité de réglage de mode (321), et
de la taille de l'objet détectée par l'unité de détection de taille (333).

7. Dispositif de lecture d'images selon la revendication 6, dans lequel :
l'unité de génération d'image corrigée (332) est conçue pour :
dans le cas où le premier mode est réglé par l'unité de réglage de mode (321) :
générer l'image de sortie à partir de l'image corrigée, par recadrage en fonction de la taille de l'objet transporté, lorsque le signal de résultat indique que la détection de la forme extérieure a réussi, et
générer l'image corrigée en tant qu'image de sortie lorsque le signal de résultat indique que la détection de la forme extérieure n'a pas réussi ; et dans le cas où le deuxième mode est réglé par l'unité de réglage de mode (321) :
générer l'image de sortie à partir de l'image corrigée, par recadrage en fonction de la taille de l'objet transporté, quel que soit le signal de résultat.

8. Dispositif de lecture d'images selon la revendication 6 ou 7, dans lequel :
la détection de la forme extérieure de l'objet transporté comprend une détection d'inclinaison ou de défaut de recalage de l'objet transporté.

9. Dispositif de lecture d'images selon l'une quelconque des revendications 6 à 8, dans lequel :
l'unité de génération d'image corrigée (332) est conçue pour :
générer l'image corrigée à partir de l'image lue, au moyen d'une correction reposant sur le signal de forme extérieure lorsque le signal de résultat indique que la détection de la forme extérieure a réussi, et
générer l'image lue en tant qu'image corrigée lorsque le signal de résultat indique que la détection de la forme extérieure n'a pas réussi.

10. Dispositif de lecture d'images selon l'une quelconque des revendications 1 à 9, dans lequel :
l'unité de réglage de zone de lecture (302) est conçue pour :
régler :
la longueur de lecture totale de la zone de lecture, et/ou
la longueur de lecture étendue
en fonction de la vitesse de transport de l'objet transporté.

11. Dispositif de lecture d'images selon la revendication 5, dans lequel :
l'unité de réglage de zone de lecture (302) est conçue pour :
régler :
la longueur de lecture totale de la zone de lecture,
la première longueur de lecture,
la deuxième longueur de lecture, et/ou
la troisième longueur de lecture
en fonction de la vitesse de transport de l'objet transporté.

12. Dispositif de lecture d'images selon l'une quelconque des revendications 1 à 11, comprenant en outre un autre capteur destiné à détecter les multiples objets, y compris l'objet à transporter dans le sens du transport ;
ledit autre capteur comprenant :
un premier capteur (89) destiné à :
détecter la largeur des multiples objets, et
communiquer la largeur des multiples objets détectés ; et
un deuxième capteur (90) destiné à :
détecter la longueur des multiples objets, et
communiquer la longueur des multiples objets détectés ;
l'unité de réglage de taille maximale (301) étant conçue pour :
régler la largeur maximale et la longueur maximale, en fonction :
de la largeur des multiples objets communiquée par le premier capteur (89), et
de la longueur des multiples objets communiquée par le deuxième capteur (90).

13. Appareil de formation d'images, comprenant :
le dispositif de lecture d'images (101, 102, 200) selon l'une quelconque des revendications 1 à 12, et
un dispositif de formation d'image (120) servant à former une image sur un support, en fonction de l'image lue par le dispositif de lecture d'image (101, 102, 200).

14. Procédé de lecture d'image exécuté par un dispositif de lecture d'image, ledit procédé de lecture d'image comprenant :
le réglage (S100, S211) de la taille maximale de multiples objets, dont :
la largeur maximale, et
la longueur maximale ;
la détermination et le réglage (S100, S211) d'une longueur de lecture totale d'une zone de lecture présente dans un objet parmi les multiples objets dans un sens de transport en fonction de la taille maximale, l'objet étant transporté dans le sens du transport ;
la détermination et le réglage (S100, S211) d'une longueur de lecture étendue d'une partie étendue de l'objet dans le sens du transport,
la partie étendue étant située en aval d'un bord avant de l'objet, dans le sens du transport ;
la détection (102, S213) du bord avant de l'objet transporté dans le sens du transport ;
le commencement (S103, S214, S223) de la lecture d'une image sur la partie étendue de l'objet, en une position étendue en aval du bord avant selon la longueur de lecture étendue dans le sens du transport ; et
la fin (S105, S216) de la lecture de l'image sur l'objet lorsqu'une longueur de lecture qui a été lue atteint la longueur de lecture totale de la zone de lecture.
